# EUROPEAN PATENT APPLICATION

(11) **EP 4 415 329 A1**
(43) Date of publication of application: **14.08.2024**
(21) Application number: 21961978.0
(22) Date of filing: 30.10.2021
(51) Int. Cl.: H04L 45/24

(54) **ROUTE PROCESSING METHOD AND NETWORK DEVICE**

(71) Applicant: Huawei Technologies Co., Ltd., Shenzhen, Guangdong 518129 (CN)
(72) Inventor: ZHUANG, Shunwan, Shenzhen, Guangdong 51829 (CN); WANG, Haibo, Shenzhen, Guangdong 51829 (CN); YANG, Ping'an, Shenzhen, Guangdong 51829 (CN); PANG, Donglei, Shenzhen, Guangdong 51829 (CN)
(74) Representative: Gill Jennings & Every LLP
(86) International application number: PCT/CN2021/127774
(87) International publication number: WO 2023/070627

(57) **Abstract**

This application provides a route processing method and a network device that are applied to the Internet. Specifically, the method includes: A first network device determines that a first BGP route is unavailable, and then the first network device determines a second BGP route associated with the first BGP route, where the first BGP route and the second BGP route are from a same autonomous system AS. In other words, a path through which the first BGP route is transmitted and a path through which the second BGP route is transmitted include the same AS. Then, the first network device reduces a priority of the second BGP route. In this application, after determining that the first BGP route is unavailable, if the first network device sends traffic through the second BGP route that is from the same AS as the first BGP route, the traffic may also be hijacked. Therefore, the priority of the second BGP route associated with the first BGP route is reduced to avoid sending the traffic through the second BGP route. This avoids hijacking of traffic sent to a destination network segment corresponding to the unavailable first BGP route, and ensures network security as much as possible.

## Description

### TECHNICAL FIELD

Embodiments of this application relate to the field communication applications, and in particular, to a route processing method and a network device.

### BACKGROUND

In today's society, the Internet is closely related to people's life and work. Currently, network services rely on infrastructure to ensure network connectivity, service availability, and service trustworthiness. However, the current infrastructure lacks secure and trustworthy measures, and faces many security threats. For example, no security factor is considered when an interdomain route system and a domain name system (domain name system, DNS) are designed, and inherently lack capabilities to ensure network security. In today's society, border gateway protocol (border gateway protocol, BGP) route-based security attacks occur every day. Therefore, the network security is a very important problem. In a current solution, a resource public key infrastructure (resource public key infrastructure, RPKI) mechanism is introduced based on BGP to ensure BGP security.

A current BGP route ensures the BGP security by validating an autonomous system (autonomous system, AS) of a route origin or validity of route advertisement by using an RPKI-based route origin authorization (route origin authorization, ROA) and route origin validation (route origin validation, ROV) solution. A network device first obtains a ROA database from an RPKI server, and then receives at least one BGP route. When an origin AS and a route prefix of the received BGP route can be matched with an entry in the ROA database, the network device determines that the BGP route is valid. However, when the route prefix of the received BGP route belongs to a subnet of a route prefix of a ROA entry in the ROA database (for example, a route prefix 10.1.1.0/24 belongs to a subnet of a route prefix 10.1.0.0/16), and the origin AS of the BGP route does not match the ROA entry, it may be determined that the BGP route is hijacked. Therefore, the network device determines that the BGP route is invalid and is forbidden from participating in a subsequent traffic forwarding process.

However, when the network device needs to forward traffic to a network segment such as 10.1.1.0/24, according to a current BGP route selection principle, the traffic may still be directed, via a BGP route whose route prefix is 10.1.0.0/16, to a device that hijacks the route prefix 10.1.1.0/24. Therefore, although the hijacked BGP route is identified, determined as an invalid route, and forbidden from being propagated, traffic sent to a destination network segment corresponding to the hijacked route cannot be prevented from being hijacked.

### SUMMARY

This application provides a route processing method and a network device that are applied to the Internet, to avoid hijacking of traffic sent to a destination network segment corresponding to an unavailable route, and ensure network security as much as possible.

According to a first aspect, a route processing method is provided, including:

A first network device determines that a first border gateway protocol BGP route is unavailable. That the first BGP route is unavailable may be determined by the first network device by validating the first BGP route based on an RPKI mechanism, or may be determined in another validation manner.

Then, the first network device determines a second BGP route associated with the first BGP route, where the first BGP route and the second BGP route are from a same autonomous system AS. In other words, a path through which the first BGP route is transmitted and a path through which the second BGP route is transmitted include the same AS.

After determining the second BGP route, the first network device reduces a priority of the second BGP route. Before determining that the second BGP route is associated with the first BGP route, the second BGP route is available and has a high priority. Therefore, after determining the second BGP route, the first network device reduces the priority of the second BGP route.

In this application, the first network device determines that the first BGP route is unavailable, then determines the second BGP route associated with the first BGP route, and then reduces the priority of the second BGP route. After it is determined that the first BGP route is unavailable, because the second BGP route is associated with the first BGP route, the second BGP route has a risk of causing traffic hijacking. Therefore, the priority of the second BGP route is reduced, to avoid hijacking of traffic sent to a destination network segment corresponding to the unavailable BGP route, and ensure network security as much as possible.

In a possible implementation of the first aspect, a route prefix corresponding to the first BGP route belongs to a subnet of a route prefix corresponding to the second BGP route, or the route prefix corresponding to the second BGP route belongs to a subnet of the route prefix corresponding to the first BGP route.

When determining a BGP route, a network device selects the BGP route according to a longest match principle. Therefore, when the route prefix corresponding to the first BGP route belongs to the subnet of the route prefix corresponding to the second BGP route, traffic sent to a destination network segment corresponding to the first BGP route through the second BGP route is hijacked to an origin AS of the route prefix of the first BGP route. Therefore, a relationship between the first BGP route and the second BGP route that may cause the traffic hijacking can be determined.

In this application, the route prefix corresponding to the first BGP route belongs to the subnet of the route prefix corresponding to the second BGP route, or the route prefix corresponding to the second BGP route belongs to the subnet of the route prefix corresponding to the first BGP route. In this way, a range of the second BGP route is clearly limited, and a problem that the traffic sent by the first network device through the second BGP route to the destination network segment corresponding to the unavailable BGP route is hijacked is resolved in a targeted manner.

In a possible implementation of the first aspect, after the priority of the second BGP route is reduced, the priority of the second BGP route is lower than a priority of a third BGP route, and the route prefix of the first BGP route belongs to a subnet of a route prefix of the third BGP route.

In this application, after the priority of the second BGP route is reduced, the priority of the second BGP route is lower than the priority of the third BGP route. After the priority of the second BGP route is reduced, the first network device may send, through the third BGP route, traffic sent to the destination network segment corresponding to the unavailable first BGP route to a correct AS to which the destination network segment belongs.

In a possible implementation of the first aspect, the first network device sends a first notification message to a second network device, where the first notification message notifies the second network device to reduce a priority of a fourth BGP route, and the fourth BGP route and the first BGP route are from a same AS. In other words, the path through which the first BGP route is transmitted and a path through which the fourth BGP route is transmitted include the same AS.

The first notification message sent by the first network device to the second network device includes at least one of related information such as the route prefix of the first BGP route, an AS adjacent to the origin AS of the first BGP route, and the path through which the first BGP route is transmitted. The second network device may reduce the priority of the fourth BGP route based on the information.

In this application, the first network device sends the first notification message to the second network device, and the second network device reduces the priority of the fourth BGP route based on the first notification message. The fourth BGP route and the first BGP route are from the same AS, and there is the risk that traffic sent by the second network device through the fourth BGP route to the destination network segment corresponding to the first BGP route is hijacked. Therefore, in this application, the second network device is enabled to more efficiently reduce the priority of the fourth BGP route that is risky, and increases a range of secure traffic forwarding.

In a possible implementation of the first aspect, the first network device sends a second notification message to a third network device, where the third network device is configured to send a third notification message to at least a fourth network device based on the second notification message, the third notification message notifies the fourth network device to reduce a priority of a fifth BGP route, and the fifth BGP route and the first BGP route are from a same AS.

In addition to sending the third notification message to the fourth network device, the first network device may further send the third notification message to another network device. A specific quantity of network devices to which the third notification message is sent is determined based on an actual situation, and is not specifically limited herein. In addition, the third notification message may be the foregoing second notification message, or may be a message in another form. This is not specifically limited herein.

In this application, the first network device sends the second notification message to the third network device, the third network device sends the third notification message to the fourth network device based on the second notification message, and then the fourth network device reduces the priority of the fifth BGP route based on the third notification message. Both the second notification message and the third notification message may be in a plurality of forms. This increases diversity of the solution. In addition, because the fifth BGP route and the first BGP route are from the same AS, the fifth BGP route is risky. Therefore, the first network device sends the second notification message to the third network device, and then the third network device sends the third notification message to enable the fourth network device to reduce the priority of the fifth BGP route. This avoids the traffic hijacking, expands a range of avoiding the traffic hijacking, and further ensures network security.

In a possible implementation of the first aspect, the first network device sends a fourth notification message to a fifth network device, where the fourth notification message notifies the fifth network device that the first BGP route is unavailable.

In this application, the first network device sends the fourth notification message to the fifth network device, where the fourth notification message notifies the fifth network device that the first BGP route is unavailable. In this way, the fifth network device quickly determines that the first BGP route is unavailable. This improves operation efficiency and increases an application scenario of the solution.

In a possible implementation of the first aspect, the first network device sends a fifth notification message to a sixth network device, where the fifth notification message notifies the sixth network device that the third BGP route is available.

In this application, the first network device sends the fifth notification message to the sixth network device, where the fifth notification message notifies that the third BGP route is available. In this way, the sixth network device quickly determines the third BGP route as a preferred route. This improves the operation efficiency and reduces a possibility of traffic hijacking.

In a possible implementation of the first aspect, the first network device sets the second BGP route as a risky route in a route table.

In this application, the first network device sets the second BGP route as the risky route in the route table. The network device sets the second BGP route as the risky route in the route table, so that the priority of the second BGP route is reduced. This provides a specific implementation of the solution, and improves reliability of the solution.

In a possible implementation of the first aspect, the first network device determines, based on a BGP peer relationship, the second BGP route associated with the first BGP route, where the first BGP route and the second BGP route are from a same BGP peer.

In this application, the first network device determines, based on the BGP peer relationship, the second BGP route associated with the first BGP route, where the first BGP route and the second BGP route are from the same BGP peer. The first network device determines a BGP route that is from the same BGP peer as the first BGP route as the second BGP route, so that a risky BGP route is accurately identified. In this way, the priority of the second BGP route is reduced, the risk of traffic hijacking is reduced, and normal operation of another BGP route in the same AS is ensured.

In a possible implementation of the first aspect, the first network device determines, based on a next hop, the second BGP route associated with the first BGP route, where a next hop corresponding to the first BGP route is the same as a next hop corresponding to the second BGP route.

In this application, the first network device determines, based on a next hop, the second BGP route associated with the first BGP route, where a next hop of the first BGP route is the same as a next hop of the second BGP route. The first network device directly determines, through the next hop, the second BGP route associated with the first BGP. This improves efficiency of determining the second BGP route, accurately identifies the risky BGP route, and reduces the risk of traffic hijacking.

In a possible implementation of the first aspect, the first network device determines, based on a ROA entry corresponding to the first BGP route, that the first BGP route is unavailable, where the ROA entry is an entry including information about an available BGP route. The route prefix corresponding to the first BGP route belongs to a subnet of a route prefix corresponding to the ROA entry, or the route prefix corresponding to the ROA entry belongs to the subnet of the route prefix corresponding to the first BGP route.

In this application, the first network device determines, based on the ROA entry corresponding to the first BGP route, that the first BGP route is unavailable, where the ROA entry is the entry including information about the available BGP route. The route prefix corresponding to the first BGP route belongs to the subnet of the route prefix corresponding to the ROA entry, or the route prefix corresponding to the ROA entry belongs to the subnet of the route prefix corresponding to the first BGP route. However, the origin AS of the first BGP route is inconsistent with an AS in a first ROA entry. Therefore, the first network determines that the first BGP route is unavailable. This increases the application scenario of the solution, and improves reliability and comprehensiveness of the solution.

In a possible implementation of the first aspect, costs of the third BGP route are higher than costs of the second BGP route. Because a length of an AS-Path of the third BGP route is greater than a length of an AS-Path of the second BGP route, costs of forwarding traffic by the first network device through the third BGP route are higher than costs of forwarding traffic through the second BGP route.

In this application, the costs of the third BGP route are higher than the costs of the second BGP route. Although the costs of the third BGP route are higher than the costs of the second BGP route, the third BGP route can ensure that traffic is securely forwarded to a destination network segment, and avoid the traffic hijacking.

In a possible implementation of the first aspect, the first network device records a status of the first BGP route by using at least one of a log, a TRAP, an alarm, or a BGP monitoring protocol.

In this application, after the first network device determines that the first BGP route is unavailable, the first network device records the status of the first BGP route by using at least one of the log, the TRAP, the alarm, the BGP monitoring protocol, or the like, to remind a network administrator that the first BGP route is risky and may be hijacked.

According to a second aspect, a route processing method is provided, including:

A first network device determines that a first BGP route is unavailable. That the first BGP route is unavailable is determined by the first network device by validating the first BGP route based on an RPKI mechanism.

Then, the first network device determines a second BGP route associated with the first BGP route, where the first BGP route and the second BGP route are from a same autonomous system AS. In other words, a path through which the first BGP route is transmitted and a path through which the second BGP route is transmitted include the same AS.

Then, the first network device sends a first notification message to a second network device, where the first notification message notifies the second network device to reduce a priority of a third BGP route, and the third BGP route and the first BGP route are from a same AS. In other words, a path through which the third BGP route is transmitted and the path through which the first BGP route is transmitted include the same AS.

In this application, the first network device determines that the first BGP route is unavailable, and then determines the second BGP route associated with the first BGP route. The first network device then sends the first notification message to the second network device, to notify the second network device to reduce the priority of the third BGP route. After it is determined that the first BGP route is unavailable, the first notification message is sent to the second network device, so that a third network device quickly reduces, based on the first notification message, the priority of the third BGP route that is from the same AS as the first BGP route, to avoid hijacking of traffic sent by the second network device to a destination network segment corresponding to the unavailable BGP route, and ensure network security as much as possible.

In a possible implementation of the second aspect, a route prefix corresponding to the first BGP route belongs to a subnet of the route prefix corresponding to the second BGP route, or the route prefix corresponding to the second BGP route belongs to a subnet of the route prefix corresponding to the first BGP route.

In a possible implementation of the second aspect, after the priority of the third BGP route is reduced, the priority of the third BGP route is lower than a priority of a fourth BGP route, and the route prefix of the first BGP route belongs to a subnet of a route prefix of the fourth BGP route.

In a possible implementation of the second aspect, the first network device sends a second notification message to a third network device, where the third network device is configured to send a third notification message to at least a fourth network device based on the second notification message, the third notification message notifies the third network device to reduce a priority of a fifth BGP route, and the fifth BGP route and the first BGP route are from a same AS. In other words, the path through which the first BGP route is transmitted and a path through which the fifth BGP route is transmitted include the same AS.

In addition to sending the third notification message to the fourth network device, the third network device may further send the third notification message to another network device. A specific quantity of network devices to which the third notification message is sent is determined based on an actual situation, and is not specifically limited herein. In addition, the third notification message may be the foregoing second notification message, or may be a message in another form. This is not specifically limited herein.

In a possible implementation of the second aspect, the first network device sends a fourth notification message to a fifth network device, where the fourth notification message notifies the fifth network device that the first BGP route is unavailable.

In a possible implementation of the second aspect, the first network device determines, based on a BGP peer relationship, the second BGP route associated with the first BGP route, where the first BGP route and the second BGP route are from a same BGP peer.

In a possible implementation of the second aspect, the first network device determines, based on a next hop, the second BGP route associated with the first BGP route, where a next hop corresponding to the first BGP route is the same as a next hop corresponding to the second BGP route.

In a possible implementation of the second aspect, the first network device determines, based on a ROA entry corresponding to the first BGP route, that the first BGP route is unavailable, where the ROA entry is an entry including information about an available BGP route. The route prefix corresponding to the first BGP route belongs to a subnet of a route prefix corresponding to the ROA entry, or the route prefix corresponding to the ROA entry belongs to the subnet of the route prefix corresponding to the first BGP route.

In a possible implementation of the second aspect, costs of the fourth BGP route are higher than costs of the third BGP route. Because a length of an AS-Path of the third BGP route is greater than a length of an AS-Path of the second BGP route, costs of forwarding traffic by the first network device through the third BGP route are higher than costs of forwarding traffic through the second BGP route.

In a possible implementation of the second aspect, the first network device records a status of the first BGP route by using at least one of a log, a TRAP, an alarm, or a BGP monitoring protocol.

According to a third aspect, a network device is provided. The network device has a function of implementing the method in any one of the first aspect or the possible implementations of the first aspect. The function may be implemented by hardware, or may be implemented by hardware executing corresponding software. The hardware or the software includes one or more modules corresponding to the function.

The network device in the third aspect performs the method described in any one of the first aspect or the possible implementations of the first aspect of this application.

According to a fourth aspect, a network device is provided. The network device has a function of implementing the method in any one of the second aspect or the possible implementations of the second aspect. The function may be implemented by hardware, or may be implemented by hardware executing corresponding software. The hardware or the software includes one or more modules corresponding to the function.

The network device in the fourth aspect performs the method described in any one of the second aspect or the possible implementations of the second aspect of this application.

According to a fifth aspect, another network device is provided, and may include a processor. The processor is coupled to a memory, the memory is configured to store instructions, and the processor is configured to execute the instructions in the memory, so that the network device performs the method in any one of the first aspect or the possible implementations of the first aspect of this application, or performs the method in any one of the second aspect or the possible implementations of the second aspect of this application.

According to a sixth aspect, another network device is provided, including a processor, configured to execute a computer program (or computer-executable instructions) stored in a memory. When the computer program (or the computer-executable instructions) is (or are) executed, the network device performs the method in the first aspect and the possible implementations of the first aspect, or performs the method in any one of the second aspect or the possible implementations of the second aspect of this application.

In a possible implementation, the processor and the memory are integrated together.

In another possible implementation, the memory is located outside the network device.

The network device further includes a communication interface. The communication interface is used by the network device to communicate with another device, for example, send or receive data and/or a signal. For example, the communication interface may be a transceiver, a circuit, a bus, a module, or a communication interface of another type.

According to a seventh aspect, a computer-readable storage medium is provided, including computer-readable instructions. When the computer-readable instructions are run on a computer, the method described in any one of the first aspect or the possible implementations of the first aspect of this application is enabled to be performed, or the method described in any one of the second aspect or the possible implementations of the second aspect of this application is enabled to be performed.

According to an eighth aspect, a computer program product is provided, including computer-readable instructions. When the computer-readable instructions are run on a computer, the method described in any one of the first aspect or the possible implementations of the first aspect of this application is enabled to be performed, or the method described in any one of the second aspect or the possible implementations of the second aspect of this application is enabled to be performed.

According to a ninth aspect, a chip is provided. The chip includes at least one processor and at least one interface circuit. The interface circuit is coupled to the processor. The at least one interface circuit is configured to perform a receiving and sending function, and send instructions to the at least one processor. The at least one processor is configured to run a computer program or instructions, and has a function of implementing the method in any one of the first aspect or the possible implementations of the first aspect, or has a function of implementing the method in any one of the second aspect or the possible implementations of the second aspect. The function may be implemented by hardware, or may be implemented software, or may be implemented a combination of hardware and software. The hardware or the software includes one or more modules corresponding to the foregoing function.

According to a tenth aspect, a communication system is provided, including a network device provided in the third aspect, the fourth aspect, the fifth aspect, and the possible implementations of the foregoing aspects.

### BRIEF DESCRIPTION OF DRAWINGS

FIG. 1 is a schematic diagram of basic interaction of RPKI;
FIG. 2a is a schematic diagram of a specific form of an IPv4 ROA PDU;
FIG. 2b is a schematic diagram of field description of an IPv4 ROA PDU;
FIG. 3a is a schematic diagram of a specific form of an IPv6 ROA PDU;
FIG. 3b is a schematic diagram of field description of an IPv6 ROA PDU;
FIG. 4 is a schematic diagram of a processing process of an existing RPKI ROA/ROV technical solution;
FIG. 5 is a schematic diagram of a status identifier corresponding to an existing ROV validation result;
FIG. 6 is a schematic flowchart of a route processing method according to an embodiment of this application;
FIG. 7 is a schematic diagram of RPKI ROA/ROV validation according to an embodiment of this application;
FIG. 8 is another schematic diagram of RPKI ROA/ROV validation according to an embodiment of this application;
FIG. 9 is a schematic diagram of a policy according to an embodiment of this application;
FIG. 10 is a schematic diagram of a route table in which a second BGP route is a risky route according to an embodiment of this application;
FIG. 11 is a schematic diagram of a process of sending a first notification message according to an embodiment of this application;
FIG. 12 is a schematic diagram of a first notification message according to an embodiment of this application;
FIG. 13 is a schematic diagram of transmitting a notification message according to an embodiment of this application;
FIG. 14a is a schematic diagram of an updated IPv4 ROA PDU according to an embodiment of this application;
FIG. 14b is a schematic diagram of an updated IPv6 ROA PDU according to an embodiment of this application;
FIG. 15 is a schematic flowchart of another route processing method according to an embodiment of this application;
FIG. 16 is a schematic diagram of a structure of a network device according to an embodiment of this application;
FIG. 17 is another schematic diagram of a structure of a network device according to an embodiment of this application; and
FIG. 18 is another schematic diagram of a structure of a network device according to an embodiment of this application.

### DESCRIPTION OF EMBODIMENTS

To make the foregoing objectives, technical solutions, and advantages of this application easier to understand, the following provides detailed descriptions. The detailed descriptions provide various embodiments of a device and/or a process by using block diagrams, flowcharts, and/or examples. These block diagrams, flowcharts, and/or examples include one or more functions and/or operations, so a person in the art may understand that each function and/or operation in the block diagrams, the flowcharts, and/or the examples may be performed independently and/or jointly by using much hardware, software, and firmware, and/or any combination thereof. In the specification, claims, and accompanying drawings of this application, the terms "first", "second", "third", "fourth", and so on (if existent) are intended to distinguish between similar objects but do not necessarily indicate a specific order or sequence. It should be understood that the data termed in such a way are interchangeable in proper circumstances so that embodiments described herein can be implemented in other orders than the order illustrated or described herein. In addition, the terms "include" and "have" and any other variants are intended to cover the non-exclusive inclusion. For example, a process, method, system, product, or device that includes a list of steps or units is not necessarily limited to those expressly listed steps or units, but may include other steps or units not expressly listed or inherent to such a process, method, product, or device.

Embodiments of this application provide a route processing method and a network device that are applied to an Internet network, to reduce a risk of traffic hijacking, and ensure network security as much as possible.

Before embodiments of this application are described, the following first describes a current RPKI-based ROA validation solution that ensures the network security, to facilitate subsequent understanding of embodiments of this application.

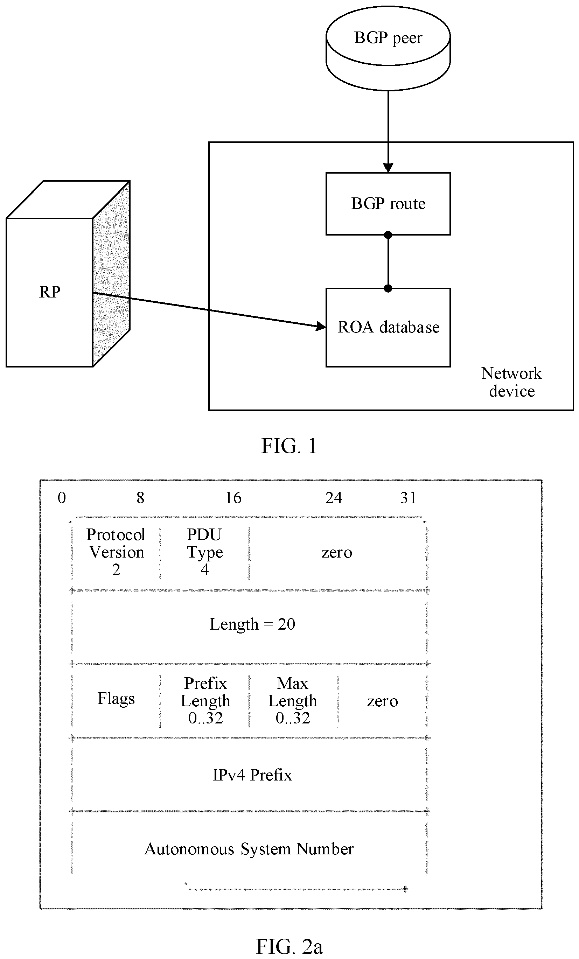

First, basic interaction of RPKI is briefly described. FIG. 1 is a schematic diagram of basic interaction of RPKI. A relying party (relying party, RP) of the RPKI periodically obtains a resource certificate and a ROA entry from an RPKI database and validates validity of the resource certificate and the ROA entry to obtain an authorization relationship between an internet protocol (internet protocol, IP) prefix and an AS number to generate a ROA database. Then, a network device obtains a ROA database from the ROA database of the RP, and establishes a ROA database for validation based on the received ROA database. After the network device receives a BGP route from another BGP peer, the network device first validates, based on the validation database, whether an origin AS number of the BGP route is consistent with an origin AS number of the ROA entry, and then may adjust, based on a validation result, an attribute of the BGP route and a selection result that affects a preferred BGP route.

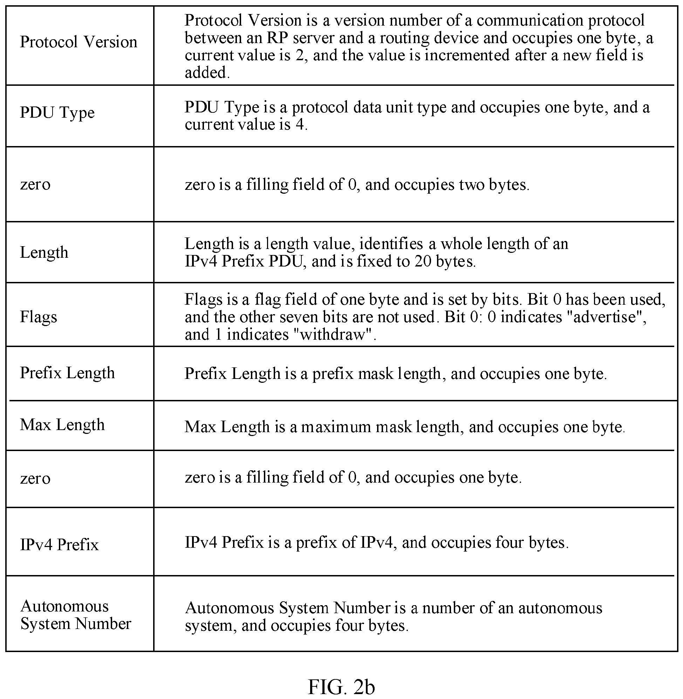

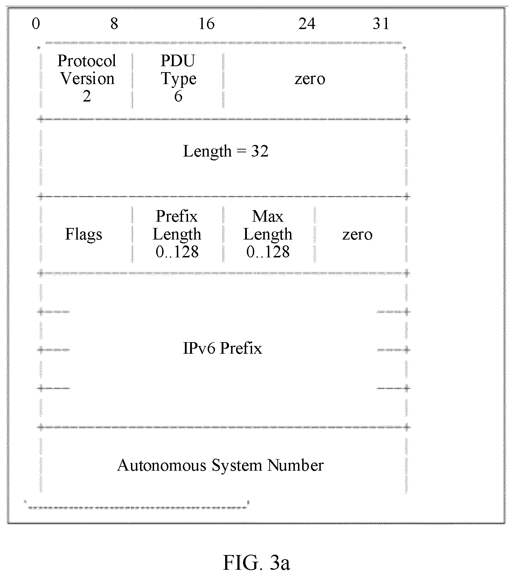

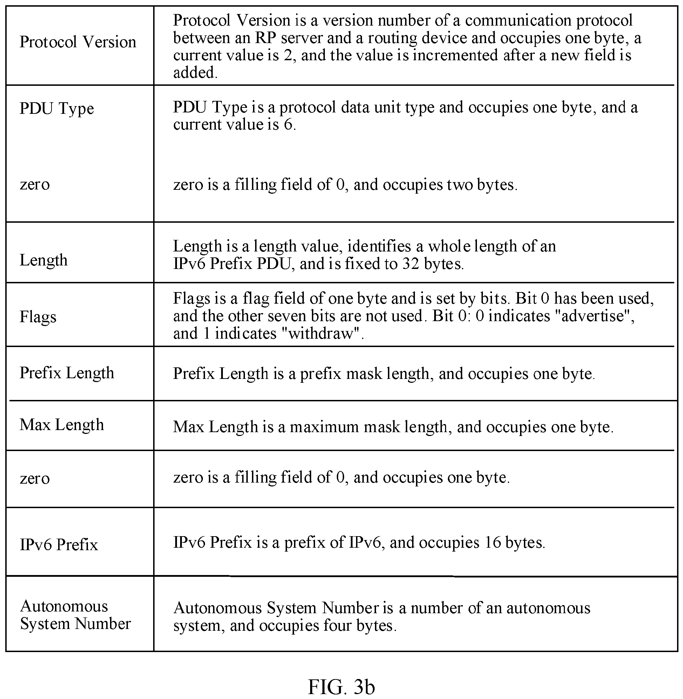

A manner in which the RP sends the ROA entry to the network device mainly includes: sending an internet protocol version 4 (internet protocol version 4, IPv4) ROA protocol data unit (protocol data unit, PDU) to the network device, or sending an internet protocol version 6 (internet protocol version 6, IPv6) ROA PDU to the network device. For a specific form of the IPv4 ROA PDU, refer to FIG. 2a. FIG. 2a is a schematic diagram of a specific form of the IPv4 ROA PDU. In addition, FIG. 2b is a schematic diagram of field description of the IPv4 ROA PDU. Data content included in the IPv4 ROA PDU can be understood through the field description in FIG. 2b. For a specific form of the IPv6 ROA PDU, refer to FIG. 3a and FIG. 3b. FIG. 3a is a schematic diagram of a specific form of the IPv6 ROA PDU, and FIG. 3b is a schematic diagram of field description of the IPv6 ROA PDU.

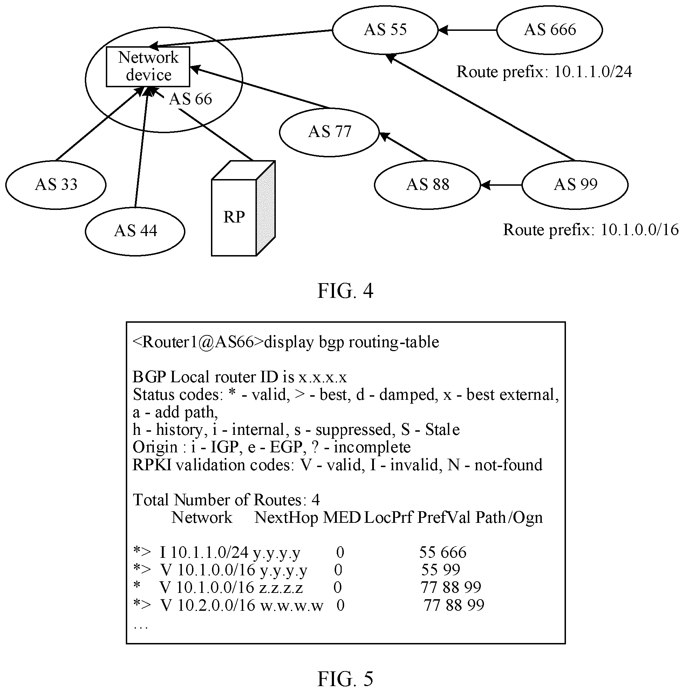

Based on the foregoing descriptions of the RPKI-based ROA validation solution, the following uses a detailed example to describe in detail validity validation performed by using an RPKI mechanism. Specifically, FIG. 4 is a schematic diagram of a processing process of an existing RPKI ROA/ROV technical solution. To ensure that traffic sent by an AS 66, an AS 33, and an AS 44 is not hijacked, a network device in an AS whose AS number is 66 implements RPKI-based ROV The RPKI-based ROV has not been deployed on network devices in other ASs on a network.

In the foregoing case, a route prefix of an AS 99 as an origin AS is 10.1.0.0/16, and a network administrator issues a ROA entry for the route prefix 10.1.0.0/16. This proves that the AS 99 can advertise the route prefix. A specific form of the issued ROA entry is: [Prefix: 10.1.0.0/16, Max Length: 16, ASN: 99], where Prefix represents the route prefix, Max Length is a maximum mask length, and ASN is a number of an AS to which the route prefix of the issued ROA entry belongs. The route prefix 10.1.0.0/16 of the AS 99 is advertised hop by hop in the network shown in FIG. 4. A network device belonging to the AS 66 receives a BGP route R1: [10.1.0.0/16, AS-Path: 55-99, Nexthop: AS 55] and a BGP route R2: [10.1.0.0/16, AS-Path: 77-88-99, Nexthop: AS 77] that have a same route prefix. 10.1.0.0/16 is the route prefix, AS-Path is an AS corresponding to a path on which the route prefix is advertised hop by hop, and Nexthop is a next hop. The network device implements the RPKI-based ROV, and obtains a ROA database from an RP. The ROA database includes the ROA entry issued by the AS 99. The network device determines, by matching the route prefixes of the BGP route R1 and the BGP route R2 and the origin AS with the ROA entry [Prefix: 10.1.0.0/16, Max Length: 16, ASN: 99], that the BGP route R1 and the BGP route R2 are available. Because a length of an AS-Path of the BGP route R1 is 2 and a length of an AS-Path of the BGP route R2 is 3, a preferred BGP route is the BGP route R1.

However, on the basis of the foregoing solution, a network attacker in FIG. 4 hijacks traffic forwarded through a BGP route whose prefix is 10.1.1.0/24 and advertised by an AS 666. The prefix 10.1.1.0/24 is a subnet of the route prefix 10.1.0.0/16, and the AS 666 is used as an origin AS of the prefix 10.1.1.0/24. The subnet is advertised hop by hop. The network device receives a BGP route R3 [10.1.1.0/24, AS-Path: 55-666, Nexthop: AS 55], performs ROV by using the ROA entry on the network device, and finds that the route prefix 10.1.1.0/24 of the BGP route R3 is the subnet of the route prefix 10.1.0.0/16 in the ROA entry [Prefix: 10.1.0.0/16, Max Length: 16, ASN: 99]. However, because the origin AS 666 of the BGP route R3 is different from the AS 99 in the ROA entry, it is suspected that the BGP route R3 is hijacked. Therefore, it is determined that the BGP route R3 is unavailable and is forbidden from participating in subsequent traffic forwarding.

An identifier corresponding to an RPKI-based ROA/ROV validation result is included in a route table of the network device. Refer to FIG. 5. FIG. 5 is a schematic diagram of a status identifier corresponding to an existing ROV validation result. RPKI validation codes: V - valid, I - invalid, and N - not-found are defined as three status identifiers of the RPKI-based ROA/ROV validation result in the corresponding route table. V is identified as valid, and the validation result indicates that the BGP route is available. I is identified as invalid, and the validation result indicates that the BGP route is unavailable and may be hijacked. N is identified as not-found, and the validation result indicates that the BGP route does not have a corresponding ROA entry. As shown in FIG. 5, in the route table, an identifier of a validation result of the BGP route R3 [10.1.1.0/24, AS-Path: 55-666, Nexthop: AS 55] is I, and identifiers of validation results of the BGP route R1 [10.1.0.0/16, AS-Path: 55-99, Nexthop: AS 55] and the BGP route R2: [10.1.0.0/16, AS-Path: 77-88-99, Nexthop: AS 77] each are V It may be understood that the identifier herein is merely used as an example to understand the solution. In an actual case, the identifier may alternatively be another letter, word, or digit. This is not specifically limited herein.

The network device forbids, based on the identifier in the route table, the BGP route R3 from participating in traffic forwarding. However, when forwarding traffic to a network segment like 10.1.1.0/24, the network device preferentially selects the BGP route R1 [10.1.0.0/16, AS-Path: 55-99, Nexthop: AS 55]. The traffic is forwarded to the AS 55 and then forwarded via the AS 55. However, there are two BGP routes in the AS 55: one is the BGP route R1 [10.1.0.0/16, AS-Path: 99, Nexthop: AS 99] from the AS 99, and the other is the BGP route R3 [10.1.1.0/24, AS-Path: 666, Nexthop: AS 666] from the AS 666. The AS 55 selects the BGP route R3 for traffic forwarding according to a longest match principle, so that the traffic is still forwarded to the AS 666. Therefore, although the BGP route R3 is forbidden from participating in traffic forwarding in the network device, it still cannot be avoided that traffic corresponding to a destination network segment corresponding to the hijacked route is hijacked.

To resolve the foregoing problem, this embodiment of this application provides a route processing method and a network setting thereof. This embodiment of this application may be applied to the Internet. The route processing method is used by the network device to determine an unavailable first BGP route, determine a second BGP route associated with the unavailable first BGP route, where the second BGP route and the first BGP route are from a same AS, and reduce a priority of the second BGP route. In this way, the network device can select a BGP route with a higher priority to forward traffic, to minimize a possibility that traffic corresponding to a destination network segment corresponding to the unavailable BGP route is hijacked.

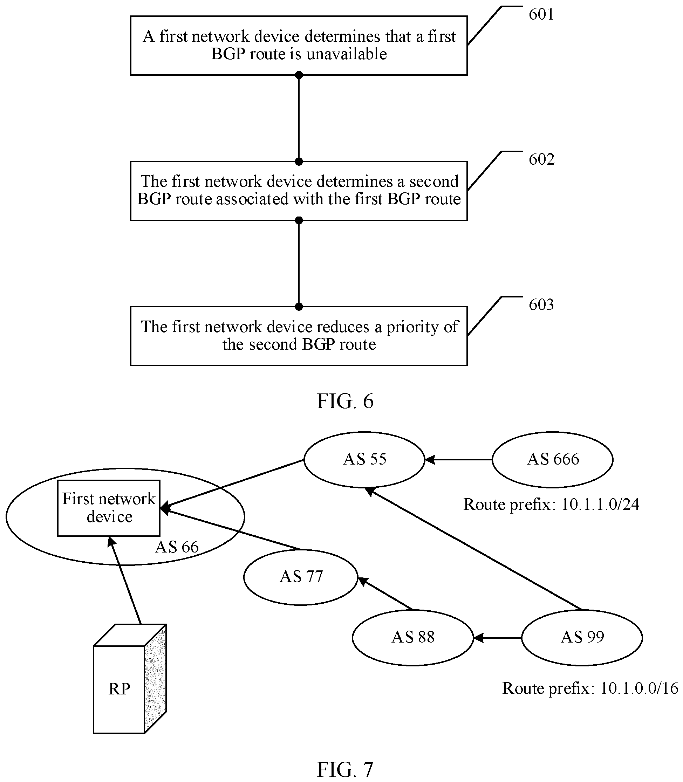

To better understand embodiments of this application, the following describes, in detail with reference to the accompanying drawings, the route processing method provided in embodiments of this application. A person of ordinary skill in the art may know that with development of technologies and emergence of a new scenario, the technical solutions provided in embodiments of this application are also applicable to a similar technical problem. Specifically, FIG. 6 is a schematic flowchart of a route processing method according to an embodiment of this application. The method specifically includes the following steps.

601: A first network device determines that a first BGP route is unavailable.

The first network device determines that the first BGP route is unavailable. That the first BGP route is unavailable may be determined by the first network device by validating the first BGP route based on an RPKI mechanism, or may be determined in another validation manner.

In a possible implementation, based on the RPKI mechanism, the first network device determines, based on a ROA entry corresponding to the first BGP route, that the first BGP route is unavailable, where the ROA entry is an entry including information about an available BGP route.

Specifically, the first network device validates the received first BGP route by using an RPKI-based ROV solution. The first network device obtains a ROA database from an RP, and then validates the first BGP route by using a ROA entry in the ROA database. A specific ROA database interaction process and validation process are similar to the processes in the foregoing RPKI-based ROA validation solution, and details are not described herein again. Optionally, when a route prefix corresponding to the ROA entry belongs to a subnet of a route prefix corresponding to the first BGP route, the first network device determines that the first BGP route is unavailable. Optionally, when the route prefix corresponding to the first BGP route belongs to a subnet of the route prefix corresponding to the ROA entry, the first network device determines that the first BGP route is unavailable.

To intuitively understand this embodiment of this application, refer to FIG.7. FIG. 7 is a schematic diagram of RPKI ROA/ROV validation according to an embodiment of this application. A ROA entry corresponding to a route prefix 10.1.0.0/16 of an AS 99 is [Prefix: 10.1.0.0/16, Max Length: 16, ASN: 99]. After the route prefix of the AS 99 is advertised hop by hop, the first network device in an AS 66 receives two BGP routes, which are respectively [10.1.0.0/16, AS-Path: 55-99, Nexthop: AS 55] and [10.1.0.0/16, AS-Path: 77-88-99, Nexthop: AS 77]. However, in a case in which a network attacker is to perform traffic hijacking, and an AS 666 as an origin AS advertises a BGP route whose route prefix is 10.1.1.0/24, after the route prefix of the AS 666 is advertised hop by hop, the first network device receives the first BGP route [10.1.1.0/24, AS-Path: 55-666, Nexthop: AS 55].

In addition, the first network device obtains, from the RP, the ROA entry [Prefix: 10.1.0.0/16, Max Length: 16, ASN: 99] corresponding to the route prefixes 10.1.0.0/16 and 10.1.0.0/24, and then separately validates the three BGP routes. The route prefixes of the two BGP routes [10.1.0.0/16, AS-Path: 55-99, Nexthop: AS 55] and [10.1.0.0/16, AS-Path: 77-88-99, Nexthop: AS 77] and the route prefix of the origin AS are consistent with the route prefix of the ROA entry [Prefix: 10.1.0.0/16, Max Length: 16, ASN: 99]. Therefore, the first network device determines that the two BGP routes are available. The route prefix 10.1.1.0/24 of the first BGP route belongs to a subnet of the route prefix 10.1.0.0/16 in the ROA entry [Prefix: 10.1.0.0/16, Max Length: 16, ASN: 99], and an origin AS of the first BGP route is the AS 666, which is different from the AS 99 in the ROA entry. Therefore, the first network device determines that the first BGP route is unavailable, in other words, there is a possibility that the first BGP route is hijacked.

It may be understood that there is another case in which a network attacker is to perform traffic hijacking, and an AS 666 as an origin AS advertises a route prefix of 10.0.0.0/8, the first BGP route received by the first network device is [10.0.0.0/8, AS-Path: 55-666, Nexthop: AS 55]. The route prefix of the ROA entry [Prefix: 10.1.0.0/16, Max Length: 16, ASN: 99] belongs to a subnet of the route prefix 10.0.0.0/8 of the first BGP route, and the AS 99 in the ROA entry is inconsistent with the origin AS 666 of the first BGP route. Therefore, the first network device determines that the first BGP route is unavailable.

It may be understood that FIG. 7 is merely used as an example for understanding this solution, and a specific form of the BGP route is also merely used as an example. In an actual case, the BGP route is not limited to this example, and may be further represented in another form, for example, the first BGP route may be represented as [10.1.0.0/16, AS-Path: 55-666, peer: 51.1.1.1] and peer is a BGP speaker, or represented as [10.1.0.0/16, AS-Path: 55-666, Nexthop: 11.1.1.1], and Nexthop is a next hop-address.

Optionally, in an actual case, the RP may be any one of an RPKI server, a network management system, a controller, a centralized analysis system, or the like. This is not specifically limited herein.

In an implementation of this application, the first network device determines, based on the ROA entry corresponding to the first BGP route, that the first BGP route is unavailable, where the ROA entry is the entry including the information about the available BGP route. The route prefix corresponding to the first BGP route belongs to the subnet of the route prefix corresponding to the ROA entry, or the route prefix corresponding to the ROA entry belongs to the subnet of the route prefix corresponding to the first BGP route. However, the origin AS of the first BGP route is inconsistent with the AS in a first ROA entry. Therefore, the first network determines that the first BGP route is unavailable. This increases an application scenario of the solution, and improves reliability and comprehensiveness of the solution.

In a possible implementation, after the first network device determines that the first BGP route is unavailable, the first network device records a status of the first BGP route by using at least one of a log, a TRAP, an alarm, a BGP monitoring protocol, or the like, to remind a network administrator that the first BGP route is risky and the origin AS of the first BGP route may be hijacked or faulty.

602: The first network device determines a second BGP route associated with the first BGP route.

The first network device determines the second BGP route associated with the first BGP route, where the first BGP route and the second BGP route are from a same AS. In other words, an AS-Path of the first BGP route and an AS-Path of the second BGP route have the same AS.

The first network device has determined that the first BGP route is unavailable. From related descriptions in FIG. 4, it may be learned that when the first network device further receives a BGP route from the same AS as the first BGP route, the BGP route may still cause hijacking of traffic sent by the first network device to a destination network segment corresponding to the first BGP route. Therefore, the first network device determines the BGP route as the second BGP route, and performs a subsequent operation on the second BGP route, to ensure security of network traffic forwarding.

In a possible implementation, the route prefix corresponding to the first BGP route belongs to a subnet of a route prefix corresponding to the second BGP route, or the route prefix corresponding to the second BGP route belongs to the subnet of the route prefix corresponding to the first BGP route.

In an implementation of this application, the route prefix corresponding to the first BGP route belongs to the subnet of the route prefix corresponding to the second BGP route, or the route prefix corresponding to the second BGP route belongs to the subnet of the route prefix corresponding to the first BGP route. In this way, a relationship between the first BGP route and the second BGP route is clarified, a range of the second BGP route is limited, and a problem that traffic sent by the first network device through the second BGP route to the destination network segment corresponding to the unavailable first BGP route is hijacked is resolved in a targeted manner.

In a possible implementation, the first network device may determine the second BGP route in a plurality of manners. For example, the first network device determines, based on a BGP peer relationship, the second BGP route associated with the first BGP route, where the first BGP route and the second BGP route are from a same BGP peer; the first network device determines, based on a next hop, the second BGP route associated with the first BGP route, where a next hop corresponding to the first BGP route is the same as a next hop corresponding to the second BGP route; or the first network device determines, based on the AS-Path, the second BGP route associated with the first BGP route, that is, determines, as the second BGP route, a BGP route whose AS-Path includes the same AS as the AS-Path of the first BGP route.

Manner 1: The first network device determines, based on the BGP peer relationship, the second BGP route associated with the first BGP route, where the first BGP route and the second BGP route are from the same BGP peer.

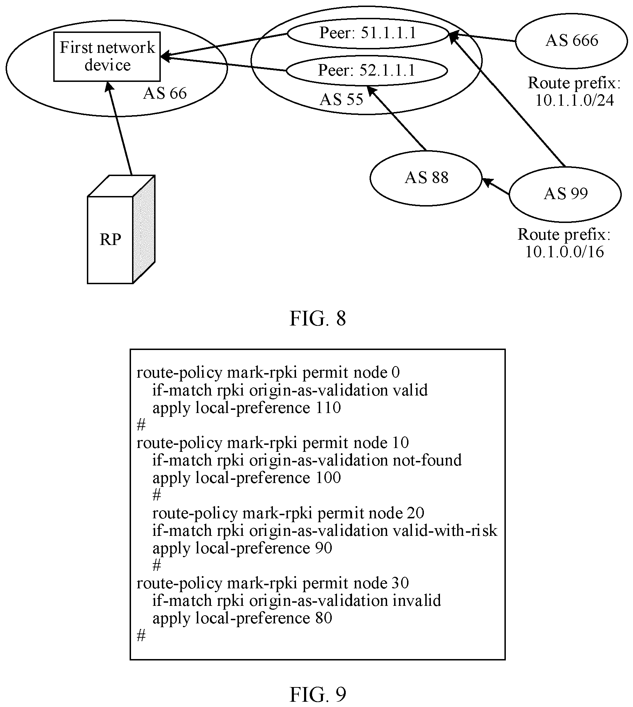

For ease of understanding, for specific details, refer to FIG. 8. FIG. 8 is another schematic diagram of RPKI ROA/ROV validation according to an embodiment of this application. The first network device determines that the unavailable first BGP route is [10.1.1.0/24, AS-Path: 55-666, peer: 51.1.1.1], and the other two available BGP routes are respectively [10.1.0.0/16, AS-Path: 55-99, peer: 51.1.1.1] and [10.1.0.0/16, AS-Path: 55-88-99, peer: 52.1.1.1]. As shown in FIG. 8, there are a plurality of BGP peers in an AS 55. A peer of the first BGP route [10.1.1.0/8, AS-Path: 55-666, peer: 51.1.1.1] and a peer of the BGP route [10.1.0.0/16, AS-Path: 55-99, peer: 51.1.1.1] are both 51.1.1.1, and this indicates that the two BGP routes are from a same BGP peer in the AS 55. The peer of the BGP route [10.1.0.0/16, AS-Path: 55-88-99, peer: 52.1.1.1] is 52.1.1.1, and this indicates that the BGP route is from another BGP peer. Therefore, the first network device determines [10.1.0.0/16, AS-Path: 55-99, peer: 51.1.1.1] as the second BGP route associated with the first BGP route, where the route prefix of the first BGP route belongs to the subnet of the route prefix of the second BGP route.

In an implementation of this application, the first network device determines, based on the BGP peer relationship, the second BGP route associated with the first BGP route, where the first BGP route and the second BGP route are from the same BGP peer. The first network device determines a BGP route that is from the same BGP peer as the first BGP route as the second BGP route, so that a risky BGP route is accurately identified. In this way, a priority of the second BGP route is reduced, a risk of traffic hijacking is reduced, and normal operation of another BGP route in the same AS is ensured.

Manner 2: The first network device determines, based on the next hop, the second BGP route associated with the first BGP route, where the next hop corresponding to the first BGP route is the same as the next hop corresponding to the second BGP route.

As shown in FIG. 8, an address corresponding to peer: 51.1.1.1 is 11.1.1.1, and an address corresponding to peer: 51.1.1.1 is 21.1.1.1. In this case, route information of the unavailable first BGP route determined by the first network device may be [10.1.1.0/24, AS-Path: 55-666, Nexthop: 11.1.1.1], and the other two available BGP routes may be [10.1.0.0/16, AS-Path: 55-99, Nexthop: 11.1.1.1], and [10.1.0.0/16, AS-Path: 55-88-99, Nexthop: 21.1.1.1]. The next hop of the first BGP route is the same as a next hop of the BGP route [10.1.0.0/16, AS-Path: 55-99, Nexthop: 11.1.1.1], but is different from a next hop of the BGP route [10.1.0.0/16, AS-Path: 55-88-99, Nexthop: 21.1.1.1]. Therefore, the first network device determines that the BGP route [10.1.0.0/16, AS-Path: 55-99, Nexthop: 11.1.1.1] is the second BGP route associated with the first BGP route, and the route prefix of the first BGP route belongs to the subnet of the route prefix of the second BGP route.

In an implementation of this application, the first network device determines, based on a next hop, the second BGP route associated with the first BGP route, where a next hop of the first BGP route is the same as a next hop of the second BGP route. The first network device directly determines, through the next hop, the second BGP route associated with the first BGP. This improves efficiency of determining the second BGP route, accurately identifies a risky BGP route, and reduces a risk of traffic hijacking.

Manner 3: The first network device determines, based on the AS-Path, the second BGP route associated with the first BGP route, that is, determines, as the second BGP route, a BGP route whose AS-Path includes the same AS as the AS-Path of the first BGP route.

As shown in FIG. 7, the first BGP route [10.1.1.0/24, AS-Path: 55-666, Nexthop: AS 55] is unavailable, and both an AS-Path of the BGP route [10.1.0.0/16, AS-Path: 55-99, Nexthop: AS 55] and the AS-Path of the first BGP route include an AS 55. Therefore, the first network device determines the BGP route [10.1.0.0/16, AS-Path: 55-99, Nexthop: AS 55] as the second BGP route. As shown in FIG. 8, the first BGP route [10.1.1.0/24, AS-Path: 55-666, peer: 51.1.1.1] is unavailable, and both an AS-Path of the BGP route [10.1.0.0/16, AS-Path: 55-99, peer: 51.1.1.1] and an AS-Path of the BGP route [10.1.0.0/16, AS-Path: 55-88-99, peer: 52.1.1.1] and the AS-Path of the first BGP route include the AS 55. Therefore, the first network device determines that both the BGP route [10.1.0.0/16, AS-Path: 55-99, peer: 51.1.1.1] and the BGP route [10.1.0.0/16, AS-Path: 55-88-99, peer: 52.1.1.1] are the second BGP routes. The route prefix of the first BGP route belongs to the subnet of the route prefix of the second BGP route.

In an implementation of this application, the first network device determines, based on the AS-Path, the second BGP route associated with the first BGP route, that is, determines, as the second BGP route, the BGP route whose AS-Path includes the same AS as the AS-Path of the first BGP route. In this way, a risky BGP route is identified in a larger range, and the risk of traffic hijacking is reduced.

603: The first network device reduces the priority of the second BGP route.

After the first network device determines the second BGP route, the first network device reduces the priority of the second BGP route.

Before the first network device determines the second BGP route associated with the first BGP route, the second BGP route is available. Therefore, the priority of the second BGP route needs to be reduced, to minimize a possibility that traffic is forwarded through the second BGP route as much as possible, to reduce the risk of traffic hijacking.

In a possible implementation, the first network device sets the second BGP route as a risky route in a route table.

The first network device sets the second BGP route as the risky route in the route table, so that the priority of the second BGP route is reduced. The first network device first determines a status identifier corresponding to the second BGP route. The status identifier indicates that the second BGP route is a risky BGP route. Then, the first network device sets the status identifier and the priority in the route table according to a policy to indicate that the second BGP route is the risky route. The policy includes a correspondence between the status identifier and the priority. To understand an implementation of this application, the following uses specific examples for description.

Based on the foregoing descriptions in FIG. 5, the first network device adds the status identifier corresponding to the second BGP route to the route table. The status identifier is valid-with-risk, indicating that the second BGP route has a risk of causing traffic hijacking. It may be understood that the status identifier valid-with-risk herein is merely an example. In an actual case, the status identifier may alternatively be another letter, word, word combination, or value. This is not specifically limited herein. In addition, a second network device determines, according to the policy, the priority corresponding to the status identifier. The policy includes the correspondence between the status identifier and the priority. Specifically, FIG. 9 is a schematic diagram of a policy according to an embodiment of this application. A priority corresponding to a status identifier invalid is 80, a priority corresponding to a status identifier valid-with-risk is 90, a priority corresponding to a status identifier not-found is 100, and a priority corresponding to a status identifier valid is 110. It can be learned that a priority of a BGP route whose status identifier is valid is the highest. It may be understood that a value of a priority corresponding to each identifier shown in FIG. 9 is merely an example. In an actual case, the value may be another natural number. This is not specifically limited herein.

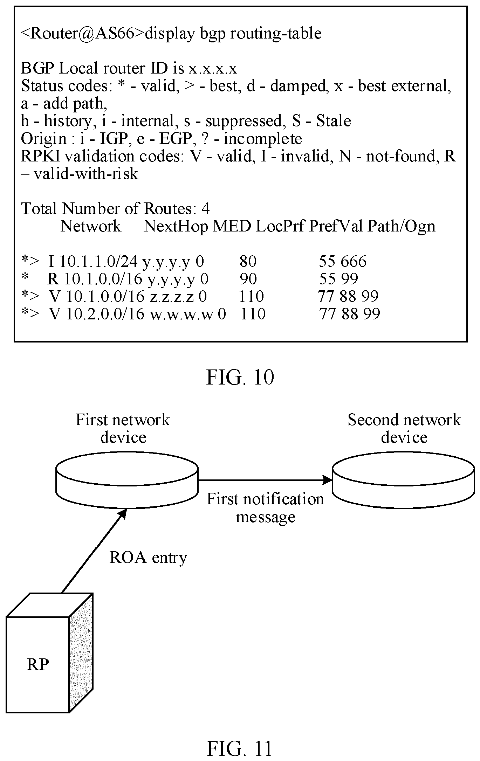

Optionally, after the priority of the second BGP route is reduced, the priority of the second BGP route is lower than a priority of a third BGP route, and the route prefix of the first BGP route belongs to a subnet of a route prefix of the third BGP route. In an example shown in FIG. 7, the first network device reduces the priority of the second BGP route [10.1.0.0/16, AS-Path: 55-99, Nexthop: AS 55]. Therefore, the BGP route [10.1.0.0/16, AS-Path: 77-88-99, Nexthop: AS 77] whose status identifier is valid is the third BGP route. The first network device sets, in the route table, the status identifier and the priority that correspond to the second BGP route to indicate that the second BGP route is the risky route, to reduce the priority of the second BGP route. For a specific form of the route table in which the first network device sets the status identifier and the priority that correspond to the second BGP route, refer to FIG. 10. FIG. 10 is a schematic diagram of a route table in which a second BGP route is a risky route according to an embodiment of this application. A status identifier of the first BGP route is invalid, and a corresponding priority is 80; a status identifier of the second BGP route is valid-with-risk, and a corresponding priority is 90; and a status identifier of the third BGP route is valid, and a corresponding priority is 110. In this case, the third BGP route has a highest priority. Therefore, when the first network device forwards traffic to a network segment like 10.1.1.0/24, the first network device preferentially selects the third BGP route to forward the traffic. This avoids traffic hijacking and ensures that the traffic is securely forwarded to a destination network segment.

In a possible implementation, costs of the third BGP route are higher than costs of the second BGP route. Because a length of an AS-Path of the third BGP route is greater than a length of an AS-Path of the second BGP route, costs of forwarding traffic by the first network device through the third BGP route are higher than costs of forwarding traffic through the second BGP route.

In an implementation of this application, the first network device determines the priority of the second BGP route based on the status identifier corresponding to the second BGP route, and reduces the priority of the second BGP route by adding the status identifier and the priority that correspond to the second BGP route to the route table. This provides a specific implementation of the solution, and improves reliability of the solution.

In the foregoing implementation of this application, the first network device determines that the first BGP route is unavailable, determines the second BGP route associated with the first BGP route, and reduces the priority of the second BGP route. After it is determined that the first BGP route is unavailable, because the second BGP route is associated with the first BGP route, the second BGP route has the risk of causing traffic hijacking. Therefore, the priority of the second BGP route is reduced, to avoid hijacking of traffic sent to a destination network segment corresponding to the unavailable BGP route, and ensure network security as much as possible.

It should be noted that in some implementations of this application, the first network device further sends a first notification message to a second network device, where the first notification message notifies the second network device to reduce a priority of a fourth BGP route, and the fourth BGP route and the first BGP route are from a same AS.

It should be noted that the operation that the first network device further sends the first notification message to the second network device may be performed after any one of step 601, step 602, or step 603. This is not specifically limited herein.

For ease of understanding the foregoing implementation, refer to an example in FIG. 11. FIG. 11 is a schematic diagram of a process of sending a first notification message according to an embodiment of this application. The first network device directly sends the first notification message to the second network device.

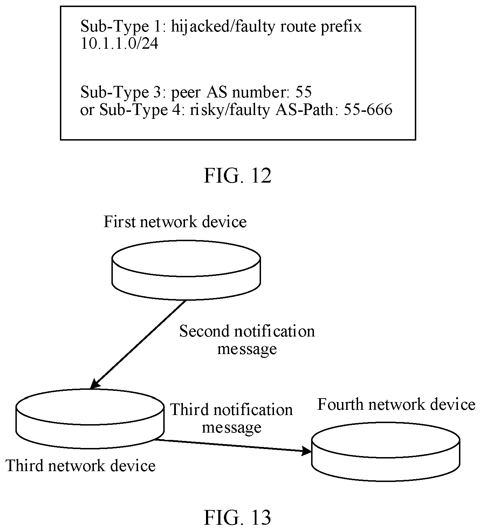

In a possible implementation, the first notification message sent by the first network device to the second network device includes at least one of related information such as the route prefix of the first BGP route, an AS adjacent to the origin AS of the first BGP route, and the AS-Path of the first BGP route. Specifically, FIG. 12 is a schematic diagram of a first notification message according to an embodiment of this application. Sub-Type 1 corresponds to the route prefix of the first BGP route, Sub-Type 3 corresponds to the AS adjacent to the origin AS of the first BGP route, and Sub-Type 4 corresponds to the AS-Path of the first BGP route. Therefore, specific information included in FIG. 12 is as follows: The route prefix of the first BGP route shown in FIG. 7 is 10.1.1.0/24, the AS is the AS 55, and the AS-Path is 55-666. The second network device may determine, based on the AS that is included in a second notification message and that is adjacent to the origin AS of the first BGP route, that the fourth BGP route that includes the AS (for example, the AS 55 shown in FIG. 12) and that is received by the second network device and the first BGP route are from the same AS. Therefore, the second network device reduces the priority of the fourth BGP route. A specific manner in which the second network device reduces the priority of the fourth BGP route is similar to the manner described in step 603 in FIG. 6. Details are not described herein again.

In an actual case, the second network device may be a routing device such as a router, a switch, or a hub, or may be another network node or gateway. This is not specifically limited herein.

In an implementation of this application, the first network device sends the first notification message to the second network device, and the second network device reduces the priority of the fourth BGP route based on the first notification message. The fourth BGP route and the first BGP route are from the same AS, and there is the risk that traffic sent by the second network device through the fourth BGP route to the destination network segment corresponding to the first BGP route is hijacked. Therefore, in this embodiment of this application, the second network device is enabled to more efficiently reduce the priority of the fourth BGP route that is risky, and increases a range of secure traffic forwarding.

It should be noted that in some implementations of this application, the first network device further sends a second notification message to a third network device, where the third network device is configured to send a third notification message to at least a fourth network device based on the second notification message, the third notification message notifies the fourth network device to reduce a priority of a fifth BGP route, and the fifth BGP route and the first BGP route are from a same AS. For a specific transmission relationship between the second notification message and the third notification message, refer to FIG. 13. FIG. 13 is a schematic diagram of transmitting a notification message according to an embodiment of this application.

It should be noted that the operation that the first network device further sends the second notification message to the third network device may be performed after any one of step 601, step 602, or step 603. This is not specifically limited herein.

Optionally, in addition to sending the third notification message to the fourth network device, the third network device may further send the third notification message to another network device. A specific quantity of network devices to which the third notification message is sent is determined based on an actual situation, and is not specifically limited herein.

In an actual case, the third network device may be the foregoing second network device, or may be any other device such as a routing device, a gateway, a node, an RP, or a server. This is not specifically limited herein.

In a possible implementation, the second notification message sent by the first network device is an updated ROA entry. First, the first network device updates the ROA entry corresponding to the first BGP route, and the updated ROA entry carries an identifier. It may be determined, based on the identifier, that the ROA entry carries related information of the first BGP route. The identifier may be a flag. Setting 0 indicates that the ROA entry is not updated, setting 1 indicates that the ROA entry carries the related information of the first route, and that the ROA entry carries the related information of the first route may be indicated by a value or a letter. This is not specifically limited herein.

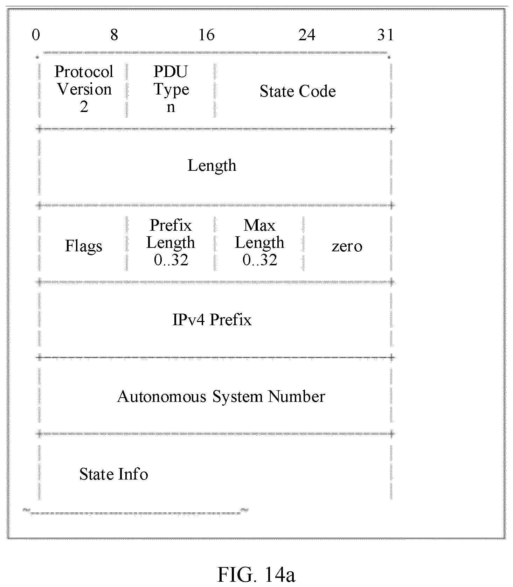

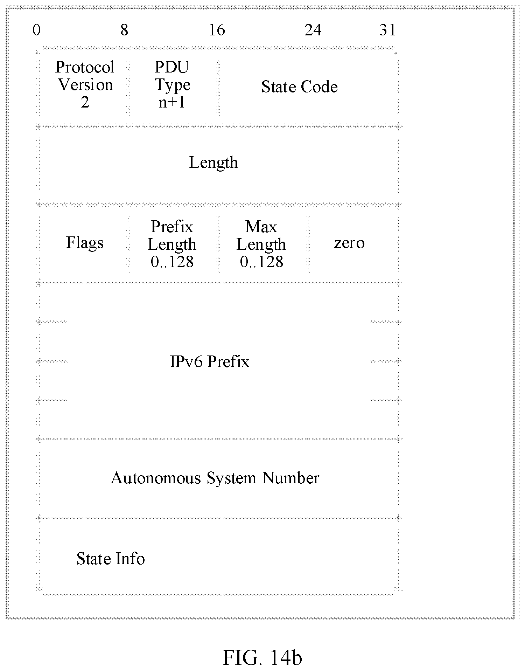

Specifically, the first network device adds at least one of related information such as the route prefix of the first BGP route, the AS adjacent to the origin AS of the first BGP route, the AS-Path of the first BGP route, the AS to which the first network device belongs, and a number of the first network device to the ROA entry, to obtain the updated ROA entry. For example, after the ROA entry [Prefix: 10.1.0.0/16, Max Length: 16, ASN: 99] corresponding to the first BGP is updated, [Prefix: 10.1.0.0/16, Max Length: 16, ASN: 99, Sub-Type 1: 10.1.1.0/24, Sub-Type 3: AS 55, Sub-Type 5: AS 66 + Router-ID of Router 1] is obtained. Sub-Type 1 represents the route prefix of the first BGP route, Sub-Type 3 represents the AS adjacent to the origin AS of the first BGP route, and Sub-Type 5 represents the AS to which the first network device belongs and the number of the first network device. A specific form of the updated ROA entry is shown in FIG. 14a and FIG. 14b. FIG. 14a is a schematic diagram of an updated IPv4 ROA PDU according to an embodiment of this application. FIG. 14b is a schematic diagram of an updated IPv6 ROA PDU according to an embodiment of this application. State code is the foregoing identifier for confirming that the ROA entry carries the related information of the first BGP route, and state info is the related information of the first BGP route. Then, the first network device sends updated ROA to the third network device. Optionally, the second notification message is the foregoing first notification message, and specific content is similar to the content shown in FIG. 12. Details are not described herein again.

After receiving the second notification message, the third network device sends the third notification message to the fourth network device based on the received second notification message. Optionally, the third notification message may be the same as the second notification message. In this case, the third network device directly sends the updated ROA entry to the fourth network device. The third notification message may alternatively be the related information of the first BGP route included in the second notification message. In this case, the third network device sends the related information of the first BGP route to the fourth BGP route. It may be understood that in an actual case, this is not specifically limited herein. The fourth network device determines the fifth BGP route based on the related information of the first BGP route included in the received third notification message, and reduces the priority of the fifth BGP route. A specific implementation in which the fourth network device determines the fifth BGP route is similar to the implementation described in step 602 in FIG. 6, and details are not described herein again. In addition, a specific manner in which the fourth network device reduces the priority of the fifth BGP route is similar to the manner described in step 603 in FIG. 6, and details are not described herein again.

In a possible implementation, when the third network device is the RP, the third network device further updates the ROA database based on the received second notification message, the third network device sends the updated ROA database as the third notification message to the fourth network device, and the fourth network device may reduce the priority of the fifth BGP route by using the updated ROA database. For example, the third network device generates a new ROA entry [Prefix: 10.1.0.0/24, Max Length: 16, ASN: 99] based on the route prefix of the first BGP route in the second notification message. The ROA entry determines an AS to which the route prefix 10.1.0.0/24 belongs. The third notification message may be the new ROA entry [Prefix: 10.1.0.0/24, Max Length: 16, ASN: 99]. The third network device sends the new ROA entry to the fourth network device. The fourth network device may quickly determine, based on the new ROA entry, that the first BGP route is unavailable, determine the fifth BGP route, and reduce the priority of the fifth BGP route. A specific implementation is similar to the implementation described in FIG. 6, and details are not described herein again.

In an actual case, the fourth network device may be the foregoing second network device, or may be any other device such as a routing device, a gateway, a node, an RP, or a server. This is not specifically limited herein.

In an implementation of this application, in this embodiment of this application, the first network device sends the second notification message to the third network device, the third network device sends the third notification message to the fourth network device based on the second notification message, and then the fourth network device reduces the priority of the fifth BGP route based on the third notification message. Both the second notification message and the third notification message may be in a plurality of forms. This increases diversity of the solution. In addition, because the fifth BGP route and the first BGP route are from the same AS, the fifth BGP route is risky. Therefore, the first network device sends the second notification message to the third network device, and then the third network device sends the third notification message to enable the fourth network device to reduce the priority of the fifth BGP route. This avoids traffic hijacking, expands a range of avoiding the traffic hijacking, and further ensures network security.

It should be noted that in some implementations of this application, the first network device further sends a fourth notification message to a fifth network device, where the fourth notification message notifies the fifth network device that the first BGP route is unavailable.

In a possible implementation, the first network device sends fourth notification information to the fifth network device, where the fourth notification message includes at least one of related information such as the route prefix of the first BGP route, an AS adjacent to the first BGP route, and the AS-Path of the first BGP route. Optionally, the fourth notification message may be the foregoing first notification message, or may be the foregoing second notification message. This is not specifically limited herein.

The fifth network device may be the second network device, the third network device, or the fourth network device, or may be any other device such as a routing device, a gateway, a node, an RP, or a server. This is not specifically limited herein.

It should be noted that the operation that the first network device further sends the fourth notification message to the fifth network device may be performed after any one of step 601, 602, or 603. This is not specifically limited herein.

In an implementation of this application, the first network device sends the fourth notification message to the fifth network device, where the fourth notification message notifies the fifth network device that the first BGP route is unavailable. In this way, the fifth network device quickly determines that the first BGP route is unavailable. This improves operation efficiency and increases an application scenario of the solution.

It should be noted that in some implementations of this application, the first network device sends a fifth notification message to a sixth network device, where the fifth notification message notifies the sixth network device that the third BGP route is available.

In a possible implementation, the first network device sends fifth notification information to the sixth network device, where the fifth notification message may include the third BGP route and a status identifier, and/or include the priority corresponding to the third route. This is not specifically limited herein in an actual case.

The sixth network device may be the second network device, the third network device, the fourth network device, or the fifth network device, or may be any other device such as a routing device, a gateway, a node, an RP, a server, or a controller. This is not specifically limited herein.

It should be noted that the operation that the first network device sends the fifth notification message to the sixth network device may be performed after any one of step 601, step 602, or step 603. This is not specifically limited herein.

In an implementation of this application, the first network device sends the fifth notification message to the sixth network device, where the fifth notification message notifies that the third BGP route is available. In this way, the sixth network device quickly determines the third BGP route as a preferred route. This improves operation efficiency and reduces a possibility of traffic hijacking.

In the foregoing implementation of this application, after determining that the first BGP route is unavailable, the first network device not only reduces the priority of the second BGP route, but also may send a notification message to another network device, so that the another network device can reduce a priority of another BGP route that is from the same AS as the first BGP route, or determine that the first BGP route is unavailable, or determine that the third BGP route is available. This increases a coverage area of ensuring network security in the Internet, avoids to the maximum extent that corresponding traffic sent to a destination network segment corresponding to the unavailable BGP route is hijacked, and ensures network security to a great extent.

It should be noted that in the foregoing implementations of this application, the first network device may be any device such as a router, a switch, a hub, a gateway, or a node. This is not specifically limited herein.

The foregoing describes in detail the route processing method provided in this embodiment of this application. In addition to the foregoing route processing method that can resolve the problem described in FIG. 4, this embodiment of this application further provides another route processing method that can resolve the problem described in FIG. 4. This embodiment of this application may be applied to the Internet. The another route processing method is used by a first network device to determine that a first BGP route is unavailable, then determine a second BGP route associated with a second BGP route, and send a first notification message to the second network device, where the first notification message notifies the second network device to reduce a priority of a third BGP route. In this way, the second network device can select a BGP route with a higher priority to forward traffic, to minimize a possibility that traffic corresponding to a destination network segment corresponding to the unavailable route is hijacked.

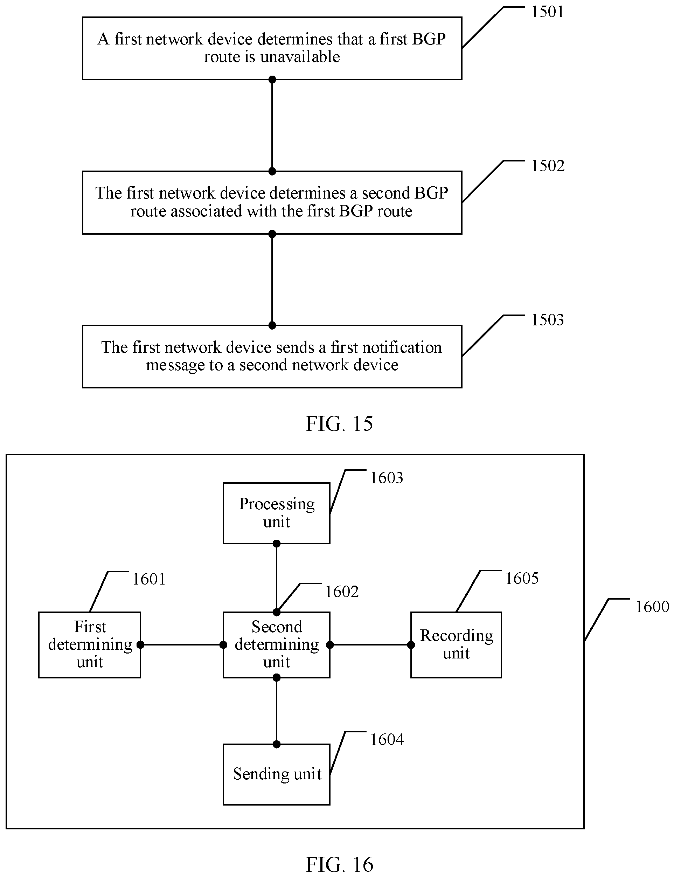

The following describes in detail the another route processing method provided in this embodiment of this application. A person of ordinary skill in the art may know that with technical development and emergence of a new scenario, the technical solutions provided in this embodiment of this application are also applicable to a similar technical problem. Specifically, FIG. 15 is a schematic flowchart of another route processing method according to an embodiment of this application. The method specifically includes the following steps.

1501: A first network device determines that a first BGP route is unavailable.

The first network device determines that the first BGP route is unavailable.

It should be noted that step 1501 is similar to step 601 in FIG. 6, and details are not described herein again.

In a possible implementation, the first network device determines, based on a ROA entry corresponding to the first BGP route, that the first BGP route is unavailable, where the ROA entry is an entry including information about an available BGP route. A specific implementation is similar to the implementation described in step 601 in FIG. 6, and details are not described herein again.

In a possible implementation, after the first network device determines that the first BGP route is unavailable, the first network device records a status of the first BGP route by using at least one of a log, a TRAP, an alarm, a BGP monitoring protocol, or the like, to remind a network administrator that the first BGP route is risky and an origin AS of the first BPG route may be hijacked or faulty.

1502: The first network device determines a second BGP route associated with the first BGP route.

The first network device determines the second BGP route associated with the first BGP route, where the first BGP route and the second BGP route are from a same autonomous system AS.

It should be noted that step 1502 is similar to step 602 in FIG. 6, and details are not described herein again.

In a possible implementation, a route prefix corresponding to the first BGP route belongs to a subnet of a route prefix corresponding to the second BGP route, or the route prefix corresponding to the second BGP route belongs to a subnet of the route prefix corresponding to the first BGP route.

In a possible implementation, the first network device may determine the second BGP route in a plurality of manners. For example, the first network device determines, based on a BGP peer relationship, the second BGP route associated with the first BGP route, where the first BGP route and the second BGP route are from a same BGP peer; the first network device determines, based on a next hop, the second BGP route associated with the first BGP route, where a next hop corresponding to the first BGP route is the same as a next hop corresponding to the second BGP route; or the first network device determines, based on an AS-Path, the second BGP route associated with the first BGP route, that is, determines, as the second BGP route, a BGP route whose AS-Path includes the same AS as the AS-Path of the first BGP route.

A specific implementation is similar to the implementation described in step 602 in FIG. 6, and details are not described herein again.

1503: The first network device sends a first notification message to a second network device.

The first network device sends the first notification message to the second network device, where the first notification message notifies the second network device to reduce a priority of a third BGP route, and the third BGP route and the first BGP route are from a same AS.

In a possible implementation, the second network device sets the third BGP route as a risky route in a route table.

The first network device sets the second BGP route as a risky route in a route table, so that the priority of the second BGP route is reduced. A specific implementation is similar to the descriptions in step 603 in FIG. 6 that the first network device sets the second BGP route as the risky route in the route table. Details are not described herein again. Optionally, after the priority of the third BGP route is reduced, the priority of the third BGP route is lower than a priority of a fourth BGP route. The route prefix of the first BGP route belongs to a subnet of a route prefix of the fourth BGP route. Specific content is similar to the content described in step 603 in FIG. 6, and details are not described herein again.

In a possible implementation, costs of the fourth BGP route are higher than costs of the third BGP route. Because a length of an AS-Path of the fourth BGP route is greater than a length of an AS-Path of the third BGP route, costs of forwarding traffic by the second network device through the fourth BGP route are higher than costs of forwarding traffic through the third BGP route.

In the foregoing implementation of this application, the first network device determines that the first BGP route is unavailable, and then determines the second BGP route associated with the first BGP route. The first network device then sends the first notification message to the second network device, to notify the second network device to reduce the priority of the third BGP route. After it is determined that the first BGP route is unavailable, the first notification message is sent to the second network device, so that the third network device quickly reduces, based on the first notification message, the priority of the third BGP route that is from the same AS as the first BGP route, to avoid hijacking of traffic sent by the second network device to a destination network segment corresponding to the unavailable BGP route, and ensure network security as much as possible.

It should be noted that in some implementations of this application, the first network device further sends a second notification message to a third network device, where the third network device is configured to send a third notification message to at least a fourth network device based on the second notification message, the third notification message notifies the fourth network device to reduce a priority of a fifth BGP route, and the fifth BGP route and the first BGP route are from a same AS. In other words, a path through which the first BGP route is transmitted and a path through which the fifth BGP route is transmitted include the same AS. Specific content is similar to the content described in the foregoing route processing method, and details are not described herein again.

It should be noted that the operation that the first network device further sends the second notification message to the third network device may be performed after any one of step 1501, step 1502, or step 1503. This is not specifically limited herein.

It should be noted that, in some implementations of this application, the first network device further sends a fourth notification message to a fifth network device, where the fourth notification message notifies the fifth network device that the first BGP route is unavailable.

In a possible implementation, the first network device sends fourth notification information to the fifth network device, where the fourth notification message includes at least one of related information such as the route prefix of the first BGP route, an AS adjacent to the first BGP route, and the AS-Path of the first BGP route. Optionally, the fourth notification message may be the foregoing first notification message, or may be the foregoing second notification message. This is not specifically limited herein.

The fifth network device may be the second network device, the third network device, or the fourth network device, or may be any other device such as a routing device, a gateway, a node, an RP, or a server. This is not specifically limited herein.

It should be noted that the operation that the first network device further sends the fourth notification message to the fifth network device may be performed after any one of step 1501, step 1502, or step 1503. This is not specifically limited herein.

In the foregoing implementation of this application, after determining that the first BGP route is unavailable, the first network device not only sends the notification message to the second network device, but also may send a notification message to another network device, so that the another network device can reduce a priority of another BGP route that is from the same AS as the first BGP route, or determine that the first BGP route is unavailable. This increases a coverage area of ensuring network security in the Internet, avoids to the maximum extent that corresponding traffic sent to the destination network segment corresponding to the unavailable BGP route is hijacked, and ensures network security to a great extent.

It should be noted that in the foregoing implementations of this application, the first network device may be any device such as a router, a switch, a hub, a gateway, or a node. This is not specifically limited herein.

To implement the functions in the methods provided in embodiments of this application, the first network device, the second network device, the third network device, and the foregoing network devices may all include a hardware structure and/or a software module, and the foregoing functions are implemented in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

As shown in FIG. 16, an embodiment of this application further provides a network device 1600. Specifically, refer to FIG. 16. FIG. 16 is a schematic diagram of a structure of a network device according to an embodiment of this application. The network device 1600 may be a routing apparatus, for example, at least one of a router, a switch, and a hub, or an apparatus that can be used in a manner of matching a terminal device and a network device, such as a gateway or a node. In a possible implementation, the network device 1600 may include a module or unit that is in a one-to-one correspondence with the method/operation/step/action performed by the first network device in the foregoing method embodiments. The unit may be a hardware circuit, or may be software, or may be implemented by a combination of the hardware circuit and the software. In a possible implementation, the network device 1600 may include a first determining unit 1601, a second determining unit 1602, and a processing unit 1603. The first determining unit 1601 may be configured to perform the step of determining that a first BGP route is unavailable in the method embodiment shown in FIG. 6. The second determining unit 1602 may be configured to perform the step of determining a second BGP route associated with the first BGP route in the method embodiment shown in FIG. 6. The processing unit 1603 may be configured to perform the step of reducing a priority of the second BGP route in the method embodiment shown in FIG. 6.

In another possible implementation, the network device 1600 may further include a sending unit 1604. The sending unit 1604 may be configured to send a first notification message to a second network device, where the first notification message notifies the second network device to reduce a priority of a fourth BGP route, and the fourth BGP route and the first BGP route are from a same AS.

In this embodiment of this application, the first determining unit 1601 determines that the first BGP route is unavailable, the second determining unit 1602 determines the second BGP route associated with the first BGP route, and then the processing unit 1603 reduces the priority of the second BGP route. Because the first BGP route and the second BGP route are from the same AS, there is a risk that traffic sent through the second BGP route to a destination network segment corresponding to the first BGP route is hijacked. Therefore, the priority of the second BGP route is reduced, to avoid traffic hijacking and ensure network security as much as possible. The sending unit 1604 sends the first notification message to the second network device, and the second network device reduces the priority of the fourth BGP route based on the first notification message. This avoids hijacking of traffic sent through the fourth BGP route, and ensures network security in a larger range.

In another possible implementation, the network device 1600 may further include a recording unit 1605. The recording unit 1605 may be configured to record a status of the first BGP route by using at least one of a log, a TRAP, an alarm, or a BGP monitoring protocol.

In this embodiment of this application, the recording unit 1605 records the status of the first BGP route, to remind a network administrator that the first BGP route is risky and that an origin AS of the first BPG route may be hijacked or faulty.

In another possible design, the first determining unit 1601, the second determining unit 1602, the processing unit 1603, the sending unit 1604, or the recording unit 1605 may perform in a one-to-one correspondence manner the methods/operations/steps/actions in the possible implementations in the method embodiment shown in FIG. 6.

It should be noted that content such as information exchange and an execution process between modules/units in the first network device in the embodiment corresponding to FIG. 16 is based on a same concept as the method embodiment corresponding to FIG. 6 in this application. For specific content, refer to descriptions in the method embodiment shown in FIG. 6 in this application. Details are not described herein again.

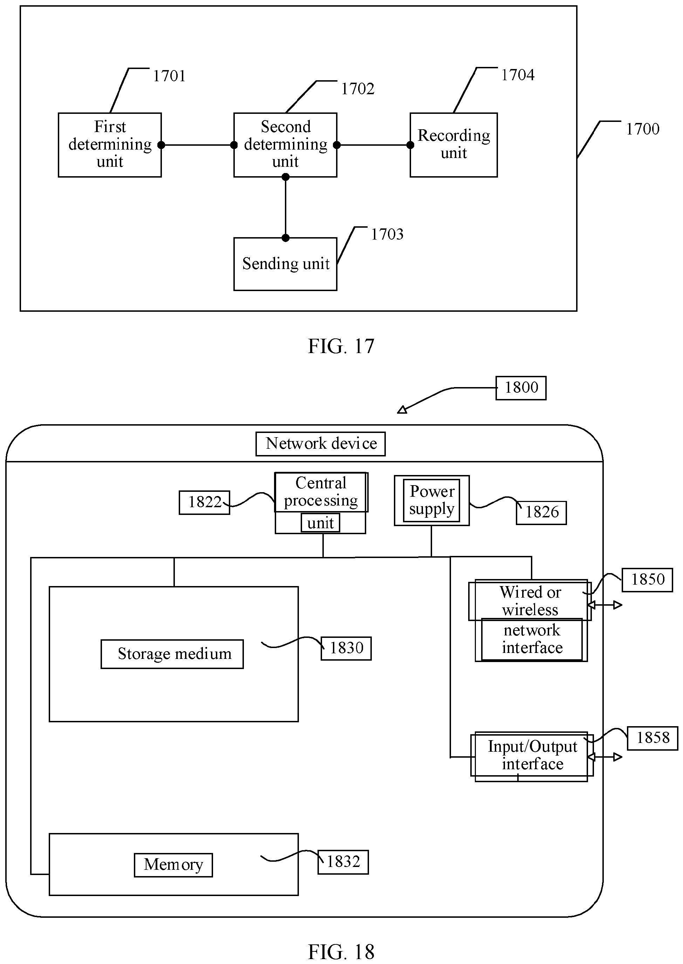

In addition, as shown in FIG. 17, an embodiment of this application further provides a network device 1700. Specifically, refer to FIG. 17. FIG. 17 is another schematic diagram of a structure of a network device according to an embodiment of this application. The network device 1700 may be a routing apparatus, for example, at least one of a router, a switch, and a hub, or an apparatus that can be used in a manner of matching a terminal device and a network device, such as a gateway or a node. In a possible implementation, the network device 1700 may include a module or unit that is in a one-to-one correspondence with the method/operation/step/action performed by the first network device in the foregoing method embodiments. The unit may be a hardware circuit, or may be software, or may be implemented by a combination of the hardware circuit and the software. In a possible implementation, the network device 1700 may include a first determining unit 1701, a second determining unit 1702, and a sending unit 1703. The first determining unit 1701 may be configured to perform the step of determining that a first BGP route is unavailable in the method embodiment shown in FIG. 15, the second determining unit 1702 may be configured to perform the step of determining a second BGP route associated with the first BGP route in the method embodiment shown in FIG. 15, and the sending unit 1703 may be configured to perform the step of sending a first notification message to a second network device in the method embodiment shown in FIG. 15.

In another possible implementation, the network device 1700 may further include a recording unit 1704, which may be configured to record a status of the first BGP route by using at least one of a log, a TRAP, an alarm, or a BGP monitoring protocol.

In this embodiment of this application, the first determining unit 1701 determines that the first BGP route is unavailable, the second determining unit 1702 determines the second BGP route associated with the first BGP route, and the sending unit 1703 sends the first notification message to the second network device, so that the second network device can quickly reduce a priority of a third BGP route. This avoids hijacking of traffic sent through the third BGP route, and ensures network security in a larger range. The recording unit 1704 records the status of the first BGP route, to remind a network administrator that the first BGP route is risky and that an origin AS of the first BPG route may be hijacked or faulty.

In another possible design, the first determining unit 1701, the second determining unit 1702, the sending unit 1703, or the recording unit 1704 may perform in a one-to-one correspondence manner the methods/operations/steps/actions in the possible implementations in the method embodiment shown in FIG. 15.

It should be noted that content such as information exchange and an execution process between modules/units in the first network device in the embodiment corresponding to FIG. 17 is based on a same concept as the method embodiment corresponding to FIG. 15 in this application. For specific content, refer to the descriptions in the method embodiment shown in FIG. 17 in this application. Details are not described herein again.

In addition, functional modules or units in the foregoing embodiments of this application may be integrated into one processor, or may exist alone physically, or two or more modules or units are integrated into one module or unit. The integrated module or unit may be implemented in a form of hardware, or may be implemented in a form of a software functional module.

The following continues to describe another network device according to an embodiment of this application. Refer to FIG. 18. FIG. 18 is another schematic diagram of a structure of a network device according to an embodiment of this application. A module described in the embodiment corresponding to FIG. 16 or FIG. 17 may be deployed on a network device 1800, to implement a function of the network device in the embodiment corresponding to FIG. 16 or FIG. 17. Specifically, the network device 1800 is implemented by one or more servers. The network device 1800 may have a large difference due to different configurations or performance, and may include one or more central processing units (central processing units, CPUs) 1822 (for example, one or more central processing units) and a memory 1832, and one or more storage media 1830 (for example, one or more mass storage devices). The memory 1832 and the storage medium 1830 may be transitory storages or persistent storages. A program stored in the storage medium 1830 may include one or more modules (not shown in the figure), and each module may include a series of instruction operations for the network device 1800. Further, the central processing unit 1822 may be configured to communicate with the storage medium 1830, and perform, on the network device 1800, a series of instruction operations in the storage medium 1830.

The network device 1800 may further include one or more power supplies 1826, one or more wired or wireless network interfaces 1850, and/or one or more input/output interfaces 1858.

In this embodiment of this application, the central processing unit 1822 is configured to perform the method in the embodiment corresponding to FIG. 6 or the method in the embodiment corresponding to FIG. 15. For example, corresponding to the method embodiment shown in FIG. 6, the central processing unit 1822 may be configured to: determine that a first BGP route is unavailable, then determine a second BGP route associated with the first BGP route, where the first BGP route and the second BGP route are from a same AS, and then reduce a priority of the second BGP route. The central processing unit 1822 corresponding to the method embodiment shown in FIG. 15 may be configured to: determine that the first BGP route is unavailable, then determine the second BGP route associated with the first BGP route, where the first BGP route and the second BGP route are from the same AS, and then send a first notification message to a second network device, where the first notification message notifies the second network device to reduce a priority of a third BGP route, and the third BGP route and the first BGP route are from the same AS.

It should be noted that the central processing unit 1822 may be further configured to perform any step in the method embodiment corresponding to FIG. 6 or FIG. 15 in this application. For specific content, refer to descriptions in the method embodiment shown in FIG. 6 or FIG. 15 in this application. Details are not described herein again.

An embodiment of this application further provides a computer-readable storage medium, including computer-readable instructions. When the computer-readable instructions are run on a computer, the computer is enabled to perform any one of the implementations shown in the foregoing method embodiments.

An embodiment of this application further provides a computer program product. The computer program product includes a computer program or instructions. When the computer program or instructions is or are run on a computer, the computer is enabled to perform any one of the implementations described in the foregoing method embodiments.

This application further provides a chip or a chip system. The chip may include a processor. The chip may further include a memory (or a storage module) and/or a transceiver (or a communication module), or the chip is coupled to a memory (or a storage module) and/or a transceiver (or a communication module). The transceiver (or the communication module) may be configured to support the chip in performing wired and/or wireless communication. The memory (or the storage module) may be configured to store a program or a group of instructions. The processor may invoke the program or the group of instructions to implement operations performed by the terminal or the network device in the foregoing method embodiments or any one of the possible implementations of the method embodiments. The chip system may include the foregoing chips, or may include the foregoing chips and another discrete component, such as the memory (or the storage module) and/or the transceiver (or the communication module).

This application further provides a communication system. The communication system may include the foregoing first network device, second network device, third network device, fourth network device, fifth network device, and sixth network device. The communication system may be configured to implement an operation performed by the first network device or another network device in any one of the foregoing method embodiments and the possible implementations of the method embodiments.

In addition, it should be noted that the described apparatus embodiment is merely an example. The units described as separate parts may or may not be physically separate, and parts displayed as units may or may not be physical units, that is, may be located in one position, or may be distributed on a plurality of network units. Some or all of the modules may be selected based on actual requirements to achieve the objectives of the solutions of embodiments. In addition, in the accompanying drawings of the apparatus embodiments provided by this application, connection relationships between modules indicate that the modules have communication connections with each other, which may be specifically implemented as one or more communication buses or signal cables.

Based on the description of the foregoing implementations, a person skilled in the art may clearly understand that this application may be implemented by software in addition to necessary universal hardware, or by dedicated hardware, including a dedicated integrated circuit, a dedicated CPU, a dedicated memory, a dedicated component, and the like. Generally, any functions that can be performed by a computer program can be easily implemented by using corresponding hardware. Moreover, a specific hardware structure used to achieve a same function may be in various forms, for example, in a form of an analog circuit, a digital circuit, or a dedicated circuit. However, as for this application, software program implementation is a better implementation in most cases. Based on such an understanding, the technical solutions of this application essentially or the part contributing to the conventional technology may be implemented in a form of a software product. The computer software product is stored in a readable storage medium, for example, a computer floppy disk, a USB flash drive, a removable hard disk, a ROM, a RAM, a magnetic disk, or an optical disc, and includes several instructions for instructing a computer to perform the methods described in embodiments of this application.

All or some of the foregoing embodiments may be implemented by using software, hardware, firmware, or any combination thereof. When software is used to implement the embodiments, all or a part of the embodiments may be implemented in a form of a computer program product.

The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, communication apparatus, computing device, or data center to another website, computer, communication apparatus, computing device, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a communication apparatus or a data center, integrating one or more usable media. The usable medium may be a magnetic medium (for example, a floppy disk, a hard disk, or a magnetic tape), an optical medium (for example, a DVD), a semiconductor medium (for example, a solid state disk (Solid State Disk, SSD)), or the like.

It should be understood that "one embodiment" or "an embodiment" mentioned in the entire specification means that particular features, structures, or characteristics related to the embodiment are included in at least one embodiment of this application. Therefore, "in one embodiment" or "in an embodiment" appearing throughout the specification does not necessarily refer to a same embodiment. In addition, these particular features, structures, or characteristics may be combined in one or more embodiments by using any appropriate manner. It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

In addition, the terms "system" and "network" may be used interchangeably in this specification. The term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

It should be understood that in embodiments of this application, "B corresponding to A" indicates that B is associated with A, and B may be determined according to A. However, it should be further understood that determining B based on A does not mean that B is determined based only on A. B may alternatively be determined based on A and/or other information.

A person of ordinary skill in the art may be aware that, in combination with the examples described in embodiments disclosed in this specification, units and algorithm steps can be implemented by electronic hardware, computer software, or a combination thereof. To clearly describe the interchangeability between the hardware and the software, the foregoing has generally described compositions and steps of each example according to functions. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, that is, may be located in one position, or may be distributed on a plurality of network units. Some or all of the units may be selected based on actual requirements to achieve the objectives of the solutions of embodiments.

In addition, functional units in embodiments of this application may be integrated into one processing unit, may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in a form of a software product. The computer software product is stored in a storage medium and includes several instructions for instructing a computer device (which may be a personal computer, a server, a network device, or the like) to perform all or some of the steps of the methods in embodiments of this application.

In conclusion, the foregoing descriptions are merely examples of embodiments of the technical solutions of this application, but are not intended to limit the protection scope of this application. Any modification, equivalent replacement, or improvement made within the principle of this application should fall within the protection scope of this application.

## Claims

1. A route processing method, comprising:
determining, by a first network device, that a first border gateway protocol BGP route is unavailable;
determining, by the first network device, a second BGP route associated with the first BGP route, wherein the first BGP route and the second BGP route are from a same autonomous system AS; and
reducing, by the first network device, a priority of the second BGP route.

2. The method according to claim 1, wherein a route prefix corresponding to the first BGP route belongs to a subnet of a route prefix corresponding to the second BGP route, or the route prefix corresponding to the second BGP route belongs to a subnet of the route prefix corresponding to the first BGP route.

3. The method according to claim 1 or 2, wherein after the priority of the second BGP route is reduced, the priority of the second BGP route is lower than a priority of a third BGP route, and the route prefix of the first BGP route belongs to a subnet of a route prefix of the third BGP route.

4. The method according to any one of claims 1 to 3, wherein the method further comprises:
sending, by the first network device, a first notification message to a second network device, wherein the first notification message notifies the second network device to reduce a priority of a fourth BGP route, and the fourth BGP route and the first BGP route are from a same AS.

5. The method according to any one of claims 1 to 4, wherein the method further comprises:
sending, by the first network device, a second notification message to a third network device, wherein the third network device is configured to send a third notification message to at least a fourth network device based on the second notification message, the third notification message notifies the fourth network device to reduce a priority of a fifth BGP route, and the fifth BGP route and the first BGP route are from a same AS.

6. The method according to any one of claims 1 to 5, wherein the method further comprises:
sending, by the first network device, a fourth notification message to a fifth network device, wherein the fourth notification message notifies the fifth network device that the first BGP route is unavailable.

7. The method according to any one of claims 3 to 6, wherein the method further comprises:
sending, by the first network device, a fifth notification message to a sixth network device, wherein the fifth notification message notifies the sixth network device that the third BGP route is available.

8. The method according to any one of claims 1 to 7, wherein the method further comprises:
setting, by the first network device, the second BGP route as a risky route in a route table.

9. The method according to any one of claims 1 to 8, wherein the determining, by the first network device, a second BGP route associated with the first BGP route comprises:
determining, by the first network device based on a BGP peer relationship, the second BGP route associated with the first BGP route, wherein the first BGP route and the second BGP route are from a same BGP peer.

10. The method according to any one of claims 1 to 8, wherein the determining, by the first network device, a second BGP route associated with the first BGP route comprises:
determining, by the first network device based on a next hop, the second BGP route associated with the first BGP route, wherein a next hop corresponding to the first BGP route is the same as a next hop corresponding to the second BGP route.

11. The method according to any one of claims 1 to 10, wherein the determining, by a first network device, that a first BGP route is unavailable comprises:
determining, by the first network device based on a route origin authorization ROA entry corresponding to the first BGP route, that the first BGP route is unavailable, wherein the ROA entry is an entry comprising information about an available BGP route.

12. The method according to any one of claims 3 to 11, wherein costs of the third BGP route are higher than costs of the second BGP route.

13. The method according to any one of claims 1 to 12, wherein the method further comprises:
recording, by the first network device, a status of the first BGP route by using at least one of a log, a TRAP, an alarm, or a BGP monitoring protocol.

14. A route processing method, comprising:
determining, by a first network device, that a first BGP route is unavailable;
determining, by the first network device, a second BGP route associated with the first BGP route, wherein the first BGP route and the second BGP route are from a same autonomous system AS; and
sending, by the first network device, a first notification message to a second network device, wherein the first notification message notifies the second network device to reduce a priority of a third BGP route, and the third BGP route and the first BGP route are from a same AS.

15. The method according to claim 14, wherein a route prefix corresponding to the first BGP route belongs to a subnet of a route prefix corresponding to the second BGP route, or the route prefix corresponding to the second BGP route belongs to a subnet of the route prefix corresponding to the first BGP route.

16. The method according to claim 14 or 15, wherein after the priority of the third BGP route is reduced, the priority of the third BGP route is lower than a priority of a fourth BGP route, and the route prefix of the first BGP route belongs to a subnet of a route prefix of the fourth BGP route.

17. The method according to any one of claims 14 to 16, wherein the method further comprises:
sending, by the first network device, a second notification message to a third network device, wherein the third network device is configured to send a third notification message to at least a fourth network device based on the second notification message, the third notification message notifies the third network device to reduce a priority of a fifth BGP route, and the fifth BGP route and the first BGP route are from a same AS.

18. The method according to any one of claims 14 to 17, wherein the method further comprises:
sending, by the first network device, a fourth notification message to a fifth network device, wherein the fourth notification message notifies the fifth network device that the first BGP route is unavailable.

19. The method according to any one of claims 14 to 18, wherein the determining, by the first network device, a second BGP route associated with the first BGP route comprises:
determining, by the first network device based on a BGP peer relationship, the second BGP route associated with the first BGP route, wherein the first BGP route and the second BGP route are from a same BGP peer.

20. The method according to any one of claims 14 to 19, wherein the determining, by the first network device, a second BGP route associated with the first BGP route comprises:
determining, by the first network device based on a next hop, the second BGP route associated with the first BGP route, wherein a next hop corresponding to the first BGP route is the same as a next hop corresponding to the second BGP route.

21. A network device, comprising:
a first determining unit, configured to determine that a first BGP route is unavailable;
a second determining unit, configured to determine a second BGP route associated with the first BGP route, wherein the first BGP route and the second BGP route are from a same autonomous system AS; and
a processing unit, configured to reduce a priority of the second BGP route.

22. The network device according to claim 21, wherein a route prefix corresponding to the first BGP route belongs to a subnet of a route prefix corresponding to the second BGP route, or the route prefix corresponding to the second BGP route belongs to a subnet of the route prefix corresponding to the first BGP route.

23. The network device according to claim 21 or 22, wherein after the priority of the second BGP route is reduced, the priority of the second BGP route is lower than a priority of a third BGP route, and the route prefix of the first BGP route belongs to a subnet of a route prefix of the third BGP route.

24. The network device according to any one of claims 21 to 23, wherein the network device further comprises:
a sending unit, configured to send a first notification message to a second network device, wherein the first notification message notifies the second network device to reduce a priority of a fourth BGP route, and the fourth BGP route and the first BGP route are from a same AS.

25. The network device according to any one of claims 21 to 24, wherein the sending unit is further configured to send a second notification message to a third network device, wherein the third network device is configured to send a third notification message to at least a fourth network device based on the second notification message, the third notification message notifies the fourth network device to reduce a priority of a fifth BGP route, and the fifth BGP route and the first BGP route are from a same AS.

26. The network device according to any one of claims 21 to 25, wherein the sending unit is further configured to send a fourth notification message to a fifth network device, wherein the fourth notification message notifies the fifth network device that the first BGP route is unavailable.

27. The network device according to any one of claims 23 to 26, wherein the sending unit is further configured to send a fifth notification message to a sixth network device, wherein the fifth notification message notifies the sixth network device that the third BGP route is available.

28. The network device according to any one of claims 21 to 27, wherein the processing unit is further configured to set the second BGP route as a risky route in a route table.

29. A network device, comprising:
a first determining unit, configured to determine that a first BGP route is unavailable;
a second determining unit, configured to determine a second BGP route associated with the first BGP route, wherein the first BGP route and the second BGP route are from a same autonomous system AS; and
a sending unit, configured to send a first notification message to a second network device, wherein the first notification message notifies the second network device to reduce a priority of a third BGP route, and the third BGP route and the first BGP route are from a same AS.

30. The network device according to claim 29, wherein a route prefix corresponding to the first BGP route belongs to a subnet of a route prefix corresponding to the second BGP route, or the route prefix corresponding to the second BGP route belongs to a subnet of the route prefix corresponding to the first BGP route.

31. The network device according to claim 29 or 30, wherein after the priority of the third BGP route is reduced, the priority of the third BGP route is lower than a priority of a fourth BGP route, and the route prefix of the first BGP route belongs to a subnet of a route prefix of the fourth BGP route.

32. The network device according to any one of claims 29 to 31, wherein the sending unit is further configured to send a second notification message to a third network device, wherein the third network device is configured to send a third notification message to at least a fourth network device based on the second notification message, the third notification message notifies the third network device to reduce a priority of a fifth BGP route, and the fifth BGP route and the first BGP route are from a same AS.

33. The network device according to any one of claims 29 to 32, wherein the sending unit is further configured to send a fourth notification message to a fifth network device, wherein the fourth notification message notifies the fifth network device that the first BGP route is unavailable.

34. A computer-readable storage medium, comprising computer-readable instructions, wherein when the computer-readable instructions are run on a computer, the method according to any one of claims 1 to 20 is enabled to be performed.

35. A computer program product, comprising computer-readable instructions, wherein when the computer-readable instructions are run on a computer, the method according to any one of claims 1 to 20 is enabled to be performed.
